# EUROPÄISCHE PATENTSCHRIFT

(11) **EP 2 177 788 B1**
(45) Veröffentlichungstag und Bekanntmachung des Hinweises auf die Patenterteilung: **20.03.2013**
(21) Anmeldenummer: 08794017.7
(22) Anmeldetag: 09.06.2008
(51) Int. Cl.: F16H 1/08, F16H 55/08, F16H 1/32, F16H 1/28

(54) **ZAHNRADGETRIEBE (VARIANTEN) UND DARAUF BASIERENDER PLANETENZAHNRADMECHANISMUS (VARIANTEN)**
TOOTHED WHEEL GEARING (VARIANTS) AND A PLANETARY TOOTHED MECHANISM BASED THEREON (VARIANTS)
ENGRENAGE DE ROUES DENTÉES (VARIANTES) ET MÉCANISME DENTÉ PLANÉTAIRE REPOSANT SUR CELUI-CI (VARIANTES)

(30) Priorität: 09.07.2007 RU 2007125891; 31.08.2007 RU 2007134617; 26.02.2008 RU 2008107285
(43) Veröffentlichungstag der Anmeldung: 21.04.2010
(73) Patentinhaber: Closed Joint Stock Company "Technology Market", Tomsk 634021 (RU)
(72) Erfinder: KAZAKYAVICHYUS, Sergey Matveevich, Tomsk 634063 (RU); REMNEVA, Tatiana Andreevna, Tomsk 634028 (RU); KUZNETSOV, Vladimir Mikhajlovich, Tomsk 634063 (RU); STANOVSKOY, Viktor vladimirovich, 634063 Tomsk (RU)
(74) Vertreter: Jeck, Anton
(86) Internationale Anmeldenummer: PCT/RU2008/000366
(87) Internationale Veröffentlichungsnummer: WO 2009/008767

(56) Entgegenhaltungen:
- WO-A1-2008/079011
- GB-A- 612 963
- GB-A- 2 161 887
- SU-A1- 1 581 938
- SU-A1- 1 585 577
- US-A- 3 247 736

## Beschreibung

Die Erfindung betrifft ein mechanisches Getriebe für die Übertragung einer drehenden Bewegung zwischen verzahnten Rädern nach dem Oberbegriff des Anspruchs 1.

Die Erfindung kann in zylindrischen, konischen oder planetarischen Getrieben mit hoher Belastungsfähigkeit Verwendung finden.

Die breit verwendete Evolventenverzahnung hat bei allen Vorzügen auch Mängel, wie eine ungenügende tragende Fähigkeit der Zähne wegen einer kleinen Krümmung der Arbeitsoberflächen und die verhältnismäßig hohen Verluste, die mit der Reibung beim Gleiten verbunden sind [siehe Baturin A.T., lzkowitsch G. M u.a. Die Details der Maschinen, M.Maschinostrojenije, 1970, c.264]. Außerdem hat die Evolventenverzahnung Beschränkungen in der Größe der Übertragungszahl für eine Stufe. In der Praxis übertrifft die Übertragungszahl eines einstufigen Getriebes selten 7. Alle diese Mängel begründen eine Suche nach neuen Arten von Verzahnungen.

Bekannt ist die Nowikows-Verzahnung (siehe oben), in der der lineare Kontakt der Zähne in Form von Punktkontakt und Stirnkopplung durch eine axiale Kopplung ersetzt wird. Diese Verzahnung hat konvex-konkave Schraubenzähne mit entgegengesetzter Richtung der Schraubenlinie und mit einer Anfangsberührung in einem Punkt, der beim Drehen parallel zu den Achsen der Räder verschoben wird. Die Profile im Stirnschnitt werden von den Bögen von Kreisen umrissen und haben eine Krümmung von verschiedenen Zeichen. In der Nowikows-Verzahnung dominiert das Rollen, weshalb es einen höheren Wirkungsgrad hat. Diese Verzahnung verfügt über eine größere Kontaktfestigkeit bei denselben Hauptabmessungen als die Evolventenverzahnung. Jedoch verfügen diese Verzahnungen über eine erhöhte Sensibilität zur Veränderung des axialen Abstands der Räder, über eine höhere vibrationsakustische Aktivität und über eine niedrige konstruktive Flexibilität, was das Gebiet der praktischen Nutzung der Verzahnung beschränkt [siehe Schurawlew G. A. Die Fehlerhaftigkeit der physischen Grundlagen der Nowikows-Verzahnung sowie der Grund der Beschränktheit ihrer Anwendung//Getriebe und die Antriebe 2006. N2 1 (04). Mit. 38-45].

Die Evolventen-Schrägverzahnung [SU 1060835, US 3,247,736] erhöht mit einer verringerten Zahl der Zähne des kleineren Rads (des Ritzels) die Übersetzungszahl bei denselben Achsabständen. Unter anderem kann das Ritzel mit einem Zahn ausgeführt sein, der im normalen Schnitt ein Evolventenprofil hat. Die Übersetzungszahl entspricht dabei der Zahl der Zähne des größeren Rads. Es sind Korrekturen bei den Schraubenzähnen des Evolventenprofils des Ritzels und des Rads notwendig, wobei man die Korrekturen für treibende und getriebene Räder (US 3,247,736) verschieden ausführen muss. Die gegebene Verzahnung ist als Prototyp für die erste Variante der Erfindung übernommen.

Die Herstellung des Ritzels mit einem Schraubenzahn eines korrigierten Evolventenprofils hat technologische Schwierigkeiten und weist Punkte der Überspitzung im Profil des Zahnes auf, die Konzentratoren von Spannungen sind, die die Festigkeit und die Belastungsfähigkeit der Verzahnung verringern.

Es ist eine Verzahnung zusammengesetzter Räder bekannt [SU 911069], die als Prototyp für die zweite Variante der Erfindung gewählt ist. Das zusammengesetzte Rad stellt ein Paket von mindestens drei gezahnten, hart untereinander befestigten Kränzen dar, deren Stirnprofile in Hinsicht zueinander um gleiche Winkel verdreht sind, der im Schritt durch die Zahl der Kränze im Rad geteilt ist. Die Eigenschaften solcher Verzahnungen sind den Eigenschaften von Schrägverzahnungen eines entsprechenden Profils ähnlich, besitzen jedoch die beschriebenen Mängel einer Evolventenverzahnung.

Es sind verschiedene Schemen von planetarischen Mechanismen bekannt, die aus Rädern mit einer Evolventenverzahnung aufgebaut sind. So ist ein Vierglied-Planetenmechanismus nach dem Schema James bekannt [I.I.Kunstobolewski. Die Theorie der Mechanismen und der Maschinen, - M, "die Wissenschaft", 1988, c.156]. Die Einrichtung enthält zwei zentrale Zahnräder, von denen eines äußere und das andere innere Zähne hat, einen Planetenträger und Satelliten, die mit beiden zentralen Rädern verzahnt sind. Im Getriebe nach diesem Schema ist ein zentrales Außenrad auf der Antriebswelle aufgesetzt, das Innenrad ist gewöhnlich ohne Bewegung und der Planetenträger ist mit der Abtriebswelle verbunden. Dieses Getriebe hat einen hohen Wirkungsgrad (97 - 98 %) und eine ziemlich einfache Konstruktion. Dieser Mechanismus wird als Prototyp für die erste Variante der planetarischen Getriebe auf Grund der angebotenen Verzahnung gewählt.

Ein Hauptmangel dieses Mechanismus ist eine nicht hohe Übersetzungszahl, die durch das Verhältnis der Radien der zentralen Räder bestimmt ist. Für die Steigerung der Übersetzungszahl muss man den Durchmesser des Innenrads wesentlich vergrößern, was die Abmessungen und die Masse des Getriebes kräftig erhöht. In der Praxis übertrifft die Übersetzungszahl dieses Mechanismus nach diesem Schema 10 nicht.

Es ist ein planetarischer Mechanismus nach dem Davids-Schema mit einer Außen-, Innen- oder Gemischtverzahnung bekannt [Jh. M.Schannikows Die planetarischen Getriebe mit der unzentrierten Verzahnung. M, "Maschgis", 1948, c.4, sowie A.F. Krajnews. Das Nachschlagewerk für die Mechanismen, M « Der Maschinenbau», 1987, c.290]. Dieser Mechanismus ist als Prototyp für die zweite Variante des planetarischen Mechanismus aufgrund der angebotenen Verzahnung gewählt. Der planetarische Mechanismus enthält einen Planetenträger mit doppelten Satelliten und zwei zentrale Räder. Jedes der zentralen Räder befindet sich in Verzahnung mit den ersten oder zweiten Rädern der doppelten Satelliten und bildet eine erste und eine zweite Reihe einer Evolventenverzahnung. Die zentralen Räder können beide Außenräder oder das eine ein Außenrad und das andere ein Innenrad (gemischte Verzahnung) sein. Der Mechanismus nach dem Schema Davids mit einer Außenverzahnung hat bei großen Übersetzungszahlen einen sehr niedrigen Wirkungsgrad [weniger als 0, 2 % bei einer Übersetzung von 10 000 nach der Einschätzung im Buch von Jh. M.Schannikows]. Die planetarischen Getriebe mit einer unzentrierten Verzahnung [M,"Maschgis", 1948, c.4] ermöglichen dem Mechanismus mit der gemischten Verzahnung bei genügend hohem Wirkungsgrad nur eine Übersetzungszahl innerhalb von 8 bis 15.

Durch GB 612 963 A ist ein mechanisches Getriebe gemäß dem Oberbegriff des Anspruchs 1 für die Übertragung einer drehenden Bewegung zwischen verschiedenen Rädern bekannt. Die Räder sind mit im Eingriff stehenden Verzahnungen versehen. Ein kleineres Rad ist mit einer Schräg verzahnung mit einem einzigen Zahn in Form eines Schraubgewindes ausgestattet. Ein größeres Rad ist mit einer Schrägverzahnung mit mehreren Zähnen versehen. Um das Rad mit der Verzahnung mit nur einem Zahn herzustellen ist vorgesehen, zunächst einen Rundstab oder einen Draht mit zunächst rundem Querschnitt beispielsweise durch Umformen oder durch Abtragen mit einem geeigneten Querschnitt zu versehen, und anschließend zu einer Schnecke mit gewünschter Ganghöhe und Durchmesser zu verdrehen. Die Verzahnung des kleineren Rads ist im Stirnschnitt elliptisch. Die Verzahnung des größeren Rads mit mehreren Zähnen ist im Stirnschnitt von einer Zykloide-Kurve umrissen. Die in Eingriff stehenden Verzahnungen gleiten aufeinander, wodurch es zu Verschleißerscheinungen kommt. Zur Abstützung des kleineren Rads gegen seitlichen Druck vom größeren Rad, ist das kleinere Rad in eine Lagerung in Form einer Hohlkehle eingesetzt, gegen die sich das kleinere Rad mit seiner Verzahnung unter Gleitreibung mit der Oberfläche der Hohlkehle abstützt.

Durch WO 20081079011 A1 ist ein mechanisches Getriebe nach dem Schema Jones bekannt. Dieses besteht aus einem auf einer zentralen Achse angeordneten, zentralen, kleinen Rad mit einer ersten Verzahnung mit nur einem oder zwei Zähnen und mindestens einem auf einem fest stehenden Planetenträger angeordnetes, mit einer zweiten Verzahnung versehenen Satelliten-Rad, welches mit einer die Räder umgebenden Innenverzahnung eines Ausgangszahnrads in Eingriff stehen. Die Verzahnung des kleinen Rads ist eine Evoloid-Sonderverzahnung gemäß DIN 3960. Das Satelliten-Rad sowie das Ausgangszahnrad haben eine entsprechende Verzahnung.

Es ist Aufgabe der Erfindung, ein sicheres Verzahnungssystem zu schaffen, das eine erhöhte Haltbarkeit und hohe Übersetzungszahlen bei verhältnismäßig kleinen Abmessungen aufweist, sowie über einen hohen Wirkungsgrad verfügt.

Die gestellte Aufgabe wird durch die Merkmale des Anspruchs 1 gelöst.

Ein technisches Ergebnis der Erfindung ist eine Erhöhung der Belastungsfähigkeit der Verzahnung, die hohe Übersetzungszahlen bei verhältnismäßig kleinen Abmessungen gewährleistet. Das technische Ergebnis, das mit der Erfindung in den planetarischen Mechanismen erreichbar ist, besteht in einer Vergrößerung der Übersetzungen ohne Vergrößerung der Abmessungen. Ein zusätzliches Ergebnis ist die Erhöhung der Belastungsfähigkeit des planetarischen Mechanismus unter sonst gleichen Bedingungen.

Um das angegebene technische Ergebnis bei einer Verzahnung der Räder mit krummen Zähnen zu erreichen, hat das kleinere der Räder (das Ritzel) einen Zahn wie auch im Prototyp. Im Unterschied zum Prototyp ist das gezahnte Profil dieses Rads von einer konsequenten und ununterbrochenen Verdrehung der Stirnschnitte des Rads, die einen Kreis darstellen, der entlang der verhältnismäßig exzentrisch verschobenen Achse gebildet ist und der eine Schraubenoberfläche erzeugt. Das größere Rad hat Schraubenzähne mit einem Zykloidenprofil im Stirnschnitt, das mit der Schraubenoberfläche des Ritzels gekoppelt ist. Das bedeutet, dass die krumme Oberfläche der Zähne des größeren Rads von der konsequenten und ununterbrochenen Verdrehung der Zykloidenstirnschnitte des Rads um die Achse des Rads ähnlich wie beim Ritzel gebildet ist. So befinden sich in jedem Stirnschnitt der verzahnten Räder die Profile im Eingriff, die vom exzentrisch verschobenen Kreis und von einer Zykloide-Kurve umrissen sind. Deshalb ist im Folgenden als Kürzung für den angegebenen Typ dieser als Exzentrik-Zykloide bezeichnet.

Für die ununterbrochene Übertragung des Drehens soll der Winkel der axialen Überdeckung des Ritzels mehr als 180 Grad sein.

Die angegebene Verzahnung kann in den Verzahnungen verschiedener Typen realisiert sein (Außenverzahnung und Innenverzahnung), für Räder verschiedener Form (zylindrisch und konisch) sowie für verschiedene Schemen planetarischer Getriebe. Für zylindrische Außenräder sind sowohl das Ritzel (das kleine Rad) als auch das Rad zylindrisch mit parallelen Achsen ausgeführt. Das größere Rad ist mit einem au-βen verzahnten Profi ausgestattet, das im Stirnschnitt die Form einer Äquidistante einer Epizykloide hat. Der Stirnschnitt der zylindrischen Räder stimmt mit ihrem Querschnitt überein. So kann das gezahnte Profil des Ritzels von der konsequenten und ununterbrochenen Verdrehung aller Querschnitte eines zylindrischen Stabes verhältnismäßig zur exzentrisch verschobenen Achse erhalten werden.

Für eine innere zylindrische Verzahnung sind auch beide Räder zylindrisch und mit parallelen Achsen ausgeführt. Das Profil des größeren Rades ist als Innenrad ausgeführt, und der Stirnschnitt hat die Form einer Äquidistante einer Hypozykloide.

Die Verzahnung kann auf Räder der konischen Form anwendbar sein. In diesem Fall ist das Ritzel von der konsequenten und ununterbrochenen Verdrehung der Stirnschnitte eines Kegels um die verhältnismäßig exzentrisch verschobene Achse gebildet. Ein beliebiger Schnitt dieser Oberfläche ist in der Ebene, der senkrechten Achse des Kegels, ebenfalls ein Kreis. Das größere Rad ist im Stirnschnitt ein Zykloideprofil. Für das konische Rad ist der Stirnschnitt ein Schnitt von der konischen Oberfläche, der senkrechten Seitenoberfläche des Rads (der zusätzliche Kegel).

Da die angebotene Verzahnung Schraubenzähne hat, so sind in der Verzahnung die axialen Komponenten der Kräfte anwesend. Für das Ausgleichen dieser Komponenten ist es zweckmäßig, die Räder als Doppelschrägräder auszuführen, d.h. mit verschiedener Richtung der Schraubenzähne.

In der zweiten Variante ist dasselbe Prinzip einer Exzentrik-Zykloide-Verzahnung nicht in Form von ununterbrochenen Eingriffslinien der Schraubenzähne, sondern in Form einer Verzahnung der zusammengesetzten Räder (wie z. B. in SU 911069) realisiert. Jedes zusammengesetzte Rad stellt ein Paket von hart untereinander befestigten mit mindestens drei gezahnter Kränze dar, deren Profile in Hinsicht zueinander im gleichen Winkel verdreht sind.

Im Unterschied zur bekannten Verzahnung ist das gezahnte Profil jedes Kranzes des Ritzels im Stirnschnitt von einem Kreis umrissen, der exzentrisch von der Radachse verschoben ist. Das gezahnte Profil der Kränze des größeren Rads ist im Stirnschnitt von zykloidalen Kurven umrissen. Hier wird die Linie des Kontakts der zusammengesetzten Räder gestuft und stückweise nicht unterbrochen. Diese Verzahnung der zusammengesetzten Räder kann auch für zylindrische Innen- und Außenräder und für Kegelräder realisiert werden.

Außer den einfachen Getrieben kann das Prinzip der Exzentrik-Zykloide-Verzahnung in verschiedenen Schemen von planetarischen Getrieben realisiert werden, ihre Belastungsfähigkeit ist bei denselben Abmessungen im Vergleich zu den Getrieben mit der Evolventenverzahnung der Räder größer.

Dazu enthält der planetarische Mechanismus nach dem Schema James, wie auch der Prototyp, ein zentrales Außenrad, ein zweites zentrales Innenrad und Satelliten, die mit beiden zentralen Rädern verzahnt sind. Die Satelliten sind auf den Achsen eines Planetenträgers aufgesetzt. Im Unterschied zum Prototyp ist das zentrale Au-βenrad einzahnig ausgeführt, mit einem Profil des Zahns in Form eines exzentrisch verschobenen Kreises, d. h. in Form eines Exzentrikers. Die Satelliten, deren Zahl nicht weniger als drei ist, haben Zähne mit einem zykloidalen Profil. Das Innenrad kann sowohl als Bolzen als auch als Zykloiden ausgeführt sein. Im planetarischen Mechanismus ist die Exzentrik-Zykloide-Verzahnung etwas vereinfacht, da Räder mit geraden Zähnen und nicht Räder mit Schraubzähnen verwendet werden können. Dies ist möglich, weil das zentrale Rad (der Exzentriker im planetarischen Schema) gleichzeitig nicht mit einem sondern mit einigen Satellitenrädern verzahnt ist.

Für die Erhöhung der Gleichmäßigkeit der Arbeit des Getriebes und für die Vergrö-βerung ihrer Belastungsfähigkeit ist das zentrale Außenrad zweckmäßig als ein zusammengesetztes Rad ausgeführt, das aus zwei und mehr verdrehten in Hinsicht zueinander identischen Kränzen (Exzentriker) besteht. Der Drehwinkel ist dem Winkelschritt geteilt durch die Zahl der Kränze gleich. Für das einzahnige Exzentriker-Rad ist das gleich 360 Grad dividiert durch die Zahl der Kränze. Die Satelliten sind voneinander entlang der Achse in parallele Ebenen verschoben. Die Satelliten in jeder Ebene sind mit einem der Exzentriker-Kränze des zusammengesetzten Außenrads verzahnt. Das Innenrad befindet sich in Verzahnung mit den Kränzen aller Satelliten.

Denselben Effekt kann man erreichen, wenn sowohl das Außenrad als auch die Satelliten als zusammengesetzte Räder mit einer Verzahnung der entsprechenden Kränze ausgeführt sind. Aber man muss dabei auch das Innenrad zusammengesetzt ausführen.

Eigentlich stellen beide Varianten eine Verzahnung des zusammengesetzten zentralen Rads mit mindestens sechs Satelliten dar, nur sind für den ersten Fall die Satelliten im Raum sowohl entlang der Achse als auch nach dem Kreis positioniert. Die Zahl der Achsen des Planetenträgers ist dabei vergrößert. Für den zweiten Fall sind die Kränze der Satelliten nur entlang der Achse verlagert, und der Planetenträger hat die kleinere Zahl von Achsen. Aber es nimmt dabei die Zahl der Kränze des zweiten zentralen Rads zu.

Nach der zweiten Variante ist die Exzentrik-Zykloide-Verzahnung im planetarischen Mechanismus nach dem Schema Davids realisiert. Der planetarische gezahnte Mechanismus nach dem Schema Davids enthält, wie auch der Prototyp, einen Planetenträger mit doppelten Satelliten und zwei zentrale Räder, die sich in der Verzahnung entsprechend mit den ersten und zweiten Rädern der doppelten Satelliten im Eingriff befinden und zwei Reihen der Verzahnung bilden. Im Unterschied zum Prototyp sind mindestens in einer Reihe der Verzahnung die kleineren Räder einzahnig ausgeführt und mit einem Profil des Zahns in Form von exzentrisch verschobenen Kreisen versehen. Die Räder des größeren Durchmessers sind in dieser Reihe mit zykloidalen Zähnen ausgeführt, die eine Exzentrik-Zykloide-Verzahnung (EZ) bilden. Die Zahl der Kränze der Satelliten in der Reihe der EZ-Verzahnung soll nicht kleiner als drei sein. Die zweite Reihe der Verzahnung in diesem Mechanismus kann von Rädern mit gewöhnlichen Evolventenzähnen gebildet sein.

Es ist zweckmäßig, die Räder mindestens einer der Reihen der Exzentrik-Zykloide-Verzahnung gestuft auszuführen, d. h. gebildet aus zwei und mehr identischen gezahnten Kränzen, die in Hinsicht zueinander um einen Winkel verdreht sind, der gleich dem Winkelschritt des Kranzes geteilt durch die Zahl der Kränze ist. Für ein einzahniges gestuftes Rad mit zwei Kränzen stellt jeder der Kränze einen Exzentriker dar, wobei die Exzentriker in Hinsicht zueinander um 180 Grad (der Winkelschritt ist 360 Grad und die Zahl der gezahnten Kränze gleich 2) verdreht sind.

Die zweite Reihe der Verzahnung in diesem planetarischen Mechanismus kann auch exzentrik-zykloidal ausgeführt sein, was die Übersetzungszahl des Mechanismus unter sonst gleichen Umständen noch mehr vergrößert. D. h. die kleineren Räder der zweiten Reihe werden einzahnig mit einem Profil des Zahns in Form eines exzentrisch verschobenen Kreises ausgeführt und befinden sich im Eingriff mit großen Rädern, die mit den Zähnen eines zykloidalen Profils versehen sind.

Für die Erhöhung der Gleichmäßigkeit bei der Übertragung des Drehens können die exzentrik-zykloidalen Zahnräder in beiden Reihen der Verzahnung gestuft ausgeführt sein und zwar aus identischen und in Hinsicht zueinander umgedrehten Kränzen.

Die zentralen Räder in beiden Reihen können außen oder gemischt verzahnt sein, d.h. in einer Reihe hat das zentrale Rad eine Außenverzahnung und in der anderen Reihe eine Innerverzahnung. Der Mechanismus, bei dem das zweite Zentralrad mit der Inneren Verzahnung ausgeführt ist, hat einen höheren Wirkungsgrad und kann größere Übersetzungszahlen gewährleisten.

Die Erfindung wird anhand von in den Zeichnungen dargestellten Ausführungsbeispielen näher erläutert. Es zeigen:
- Fig. 1: die allgemeine Ansicht einer Außenverzahnung der zylindrischen Räder mit parallelen Achsen,
- Fig. 2: dieselbe Verzahnung in der Frontansicht,
- Fig. 3: die Bildung der gezahnten Oberfläche eines kleineren Rads (eines Ritzels),
- Fig. 4: den Schnitt der Verzahnung in der Ebene senkrecht zu den Achsen der Räder,
- Fig. 5: das Fragment der Verzahnung, das per Computermodellierung erstellt wurde,
- Fig. 6: eine Außenansicht einer Innenverzahnung der zylindrischen Räder mit parallelen Achsen,
- Fig. 7, 8 u. 9: die angebotene Verzahnung für konische Räder, wobei in Fig. 7die allgemeine Ansicht der Verzahnung der konischen Räder mit kreuzenden Achsen, in Fig. 8 das kleine Rad dieser Verzahnung einzeln (das konische Ritzel) und in Fig. 9 der axiale Schnitt der Verzahnung wiedergegeben ist,
- Fig. 10: die zylindrische Verzahnung von Pfeilrädern,
- Fig. 11 u. 12: die allgemeinen Ansichten einer Verzahnung von zusammengesetzten zylindrischen Innen- und Außenrädern mit parallelen Achsen,
- Fig. 13: eine Verzahnung der zusammengesetzten konischen Räder mit sich kreuzenden Achsen,

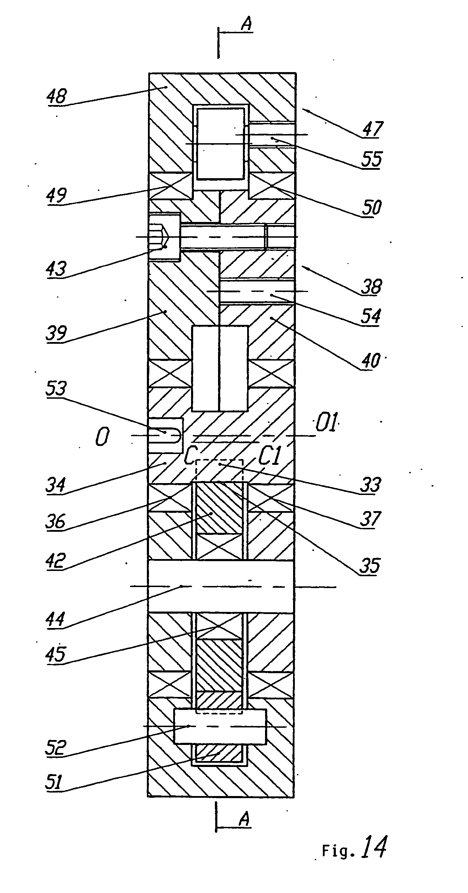

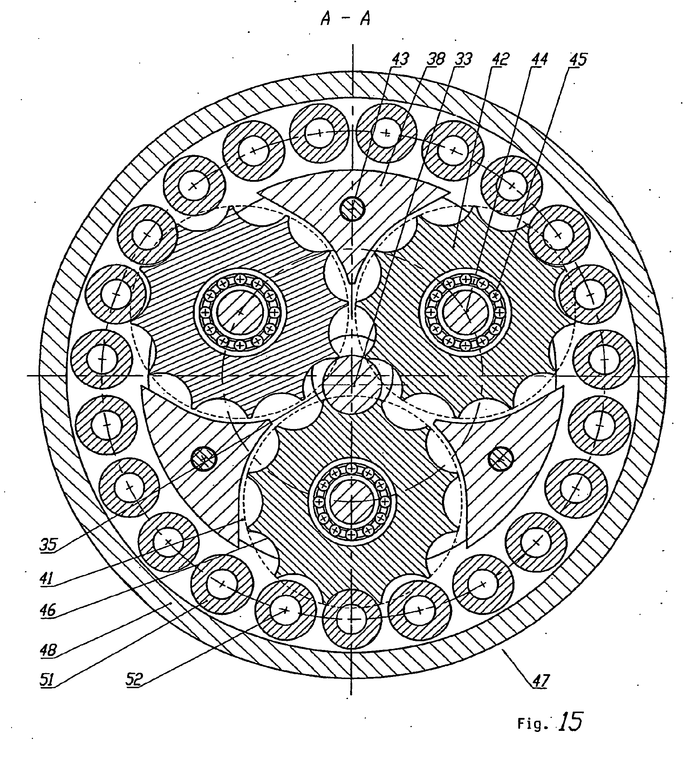

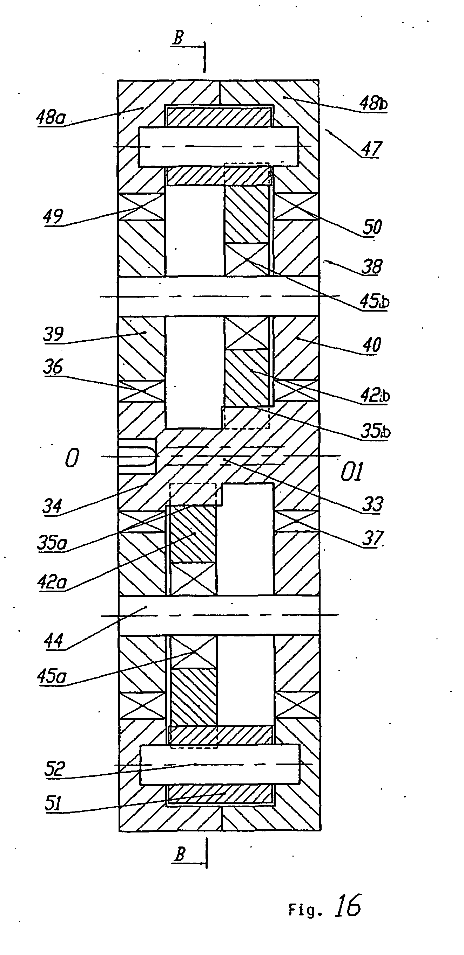

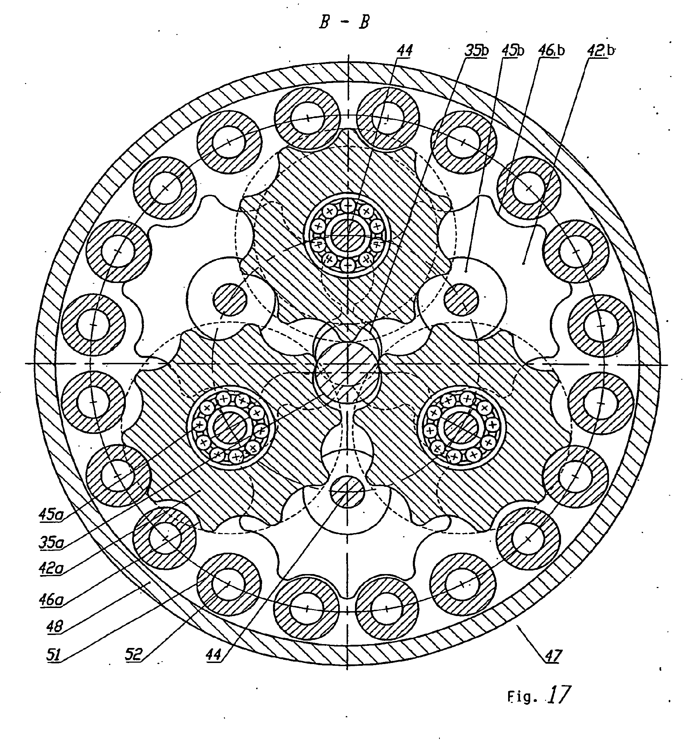

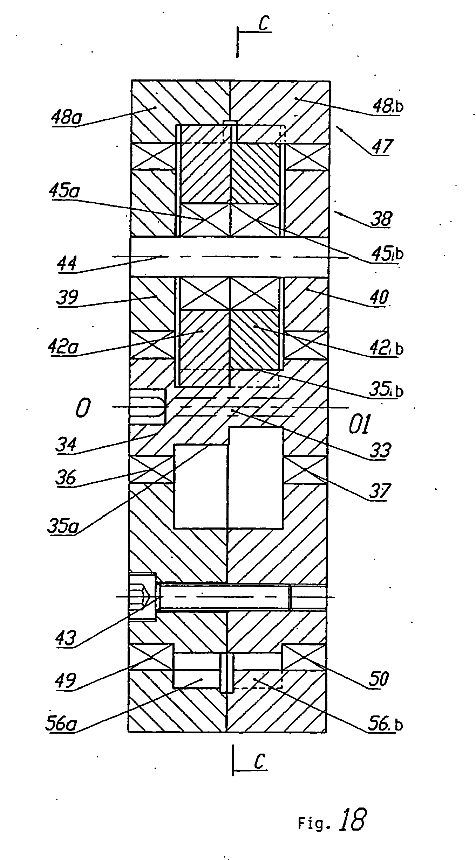

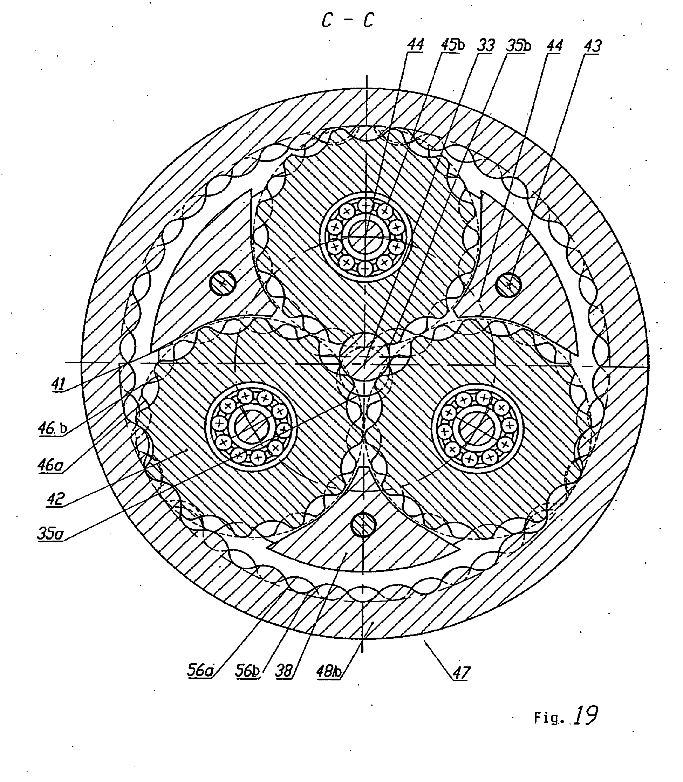

- Fig. 14-19: eine Variante der Nutzung einer Exzentrik-Zykloide-Verzahnung in einem planetarischen Mechanismus nach dem Schema James, wobei Fig. 14 den Längsschnitt, Fig. 15 den schematischen Querschnitt des planetarischen Mechanismus mit der Exzentrik-Zykloide-Verzahnung des einkranzigen Rads und der drei Satelliten, Fig. 16 und 17 dieselben Ansichten für das Getriebe mit einem zusammengesetzten zweikränzigen Außenrad und mit in verschiedene Ebenen verlagerten Satelliten und Fig. 18 und 19 den Längsschnitt der Verzahnung des Getriebes und das Schema der Verzahnung der zusammengesetzten zweikränzigen Räder wiedergeben.

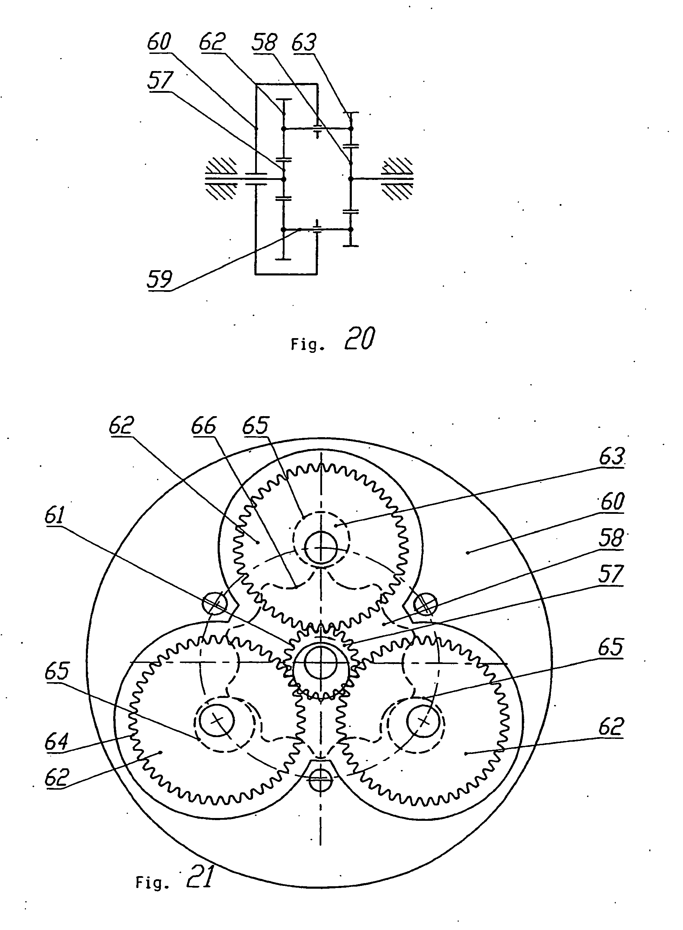

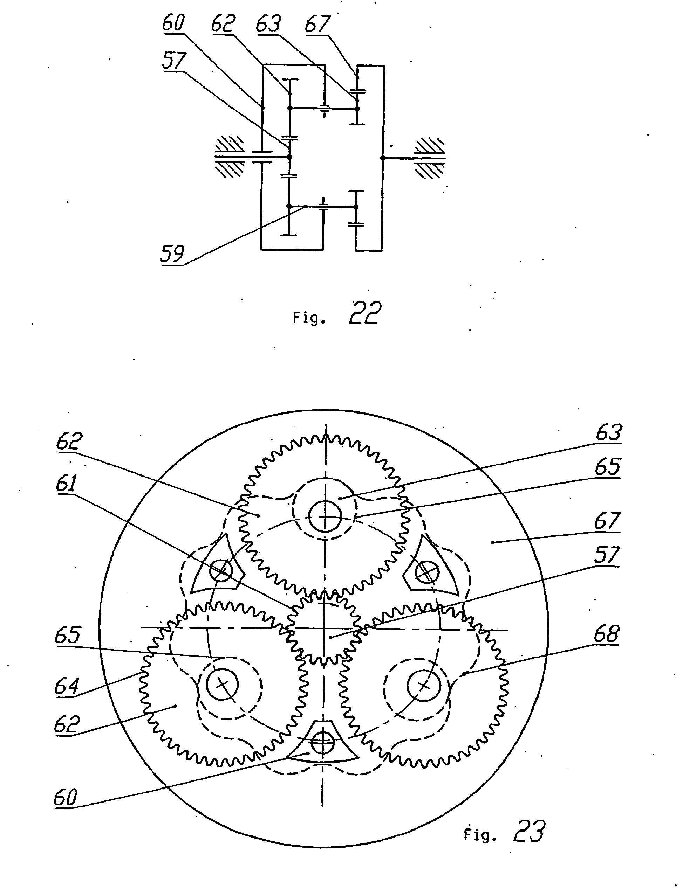

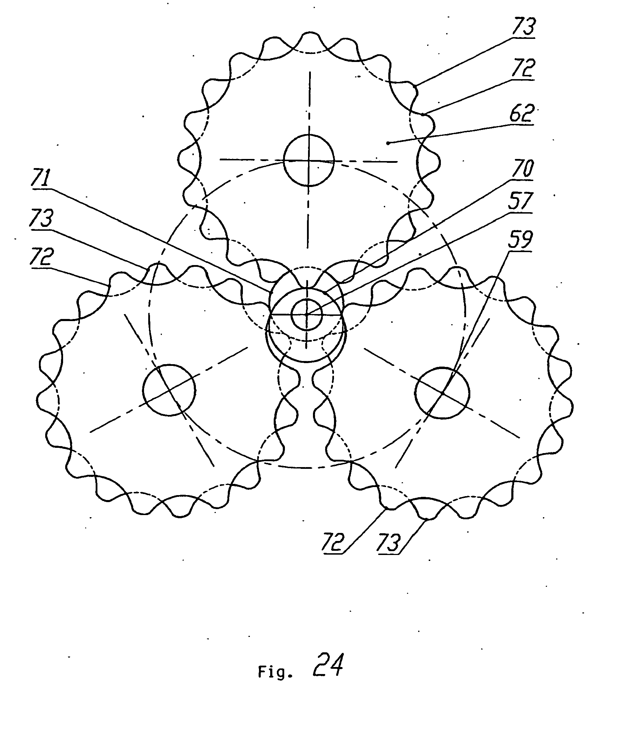

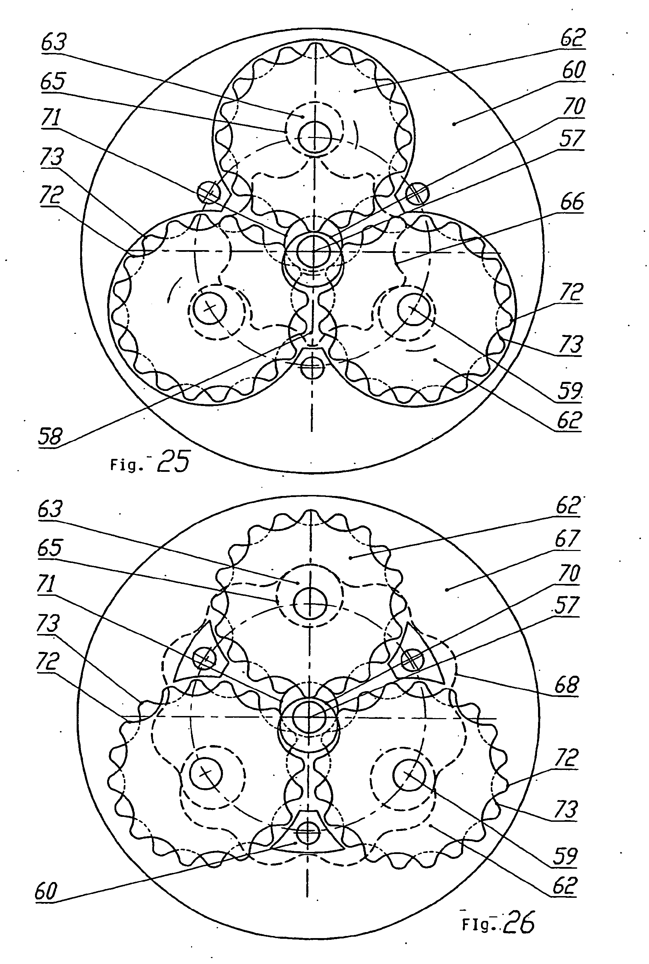

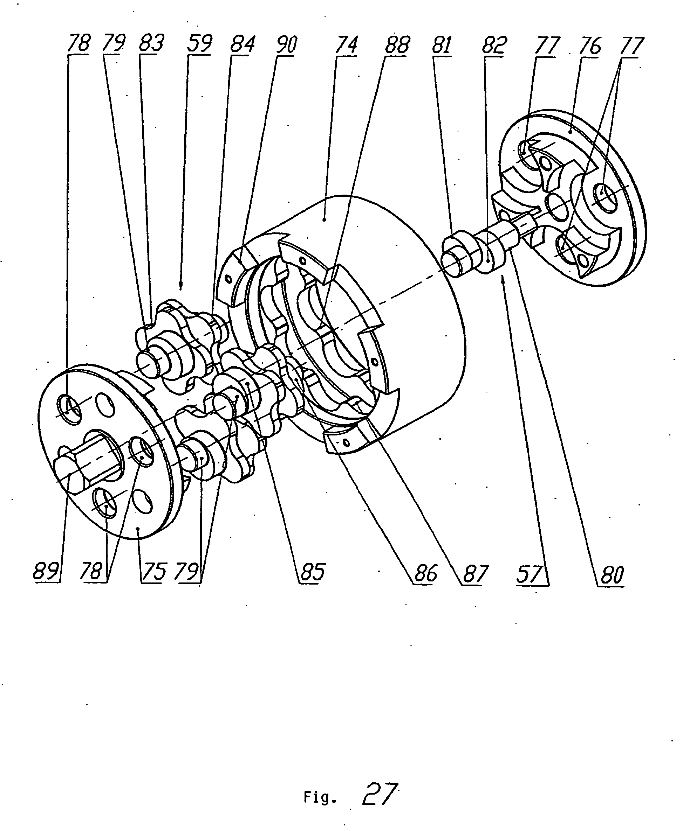

- Fig. 20 - 27: die Varianten einer Nutzung der Exzentrik-Zykloide-Verzahnung in einem planetarischen Mechanismus nach dem Schema Davids, die Fig. 20 und 22 die Schemen der planetarischen Mechanismen der Außen- und gemischten Verzahnung, Fig. 21 und 23 die Profile der Räder für die Schemen nach den Fig. 20 und 21, die in einer Reihe eine gewöhnliche Evolventenverzahnung und in der anderen Reihe eine eine Exzentrik-Zykloide-Verzahnung entsprechend der Erfindung haben, Fig. 24 den planetarischen Mechanismus mit einer Exzentrik-Zykloide-Verzahnung von gestuften Rädern, Fig. 25 und 26 die Ansicht der Profile der Räder mit Exzentrik-Zykloide-Verzahnung in beiden Reihen für die Mechanismen nach den Schemen der Fig. 20 und 21, auf diesen Figuren sind die Räder in einer der Reihen der Verzahnung als gestufte Räder ausgeführt und Fig. 27 als Beispiel die Konstruktion des Getriebes für einen Drehmomentverstärker, der nach dem Schema in Fig. 21 ausgeführt ist und in beiden Reihen Exzentrik-Zykloide-Verzahnung der gestuften Räder hat.

Wir betrachten die angebotene Verzahnung etwas detaillierter.

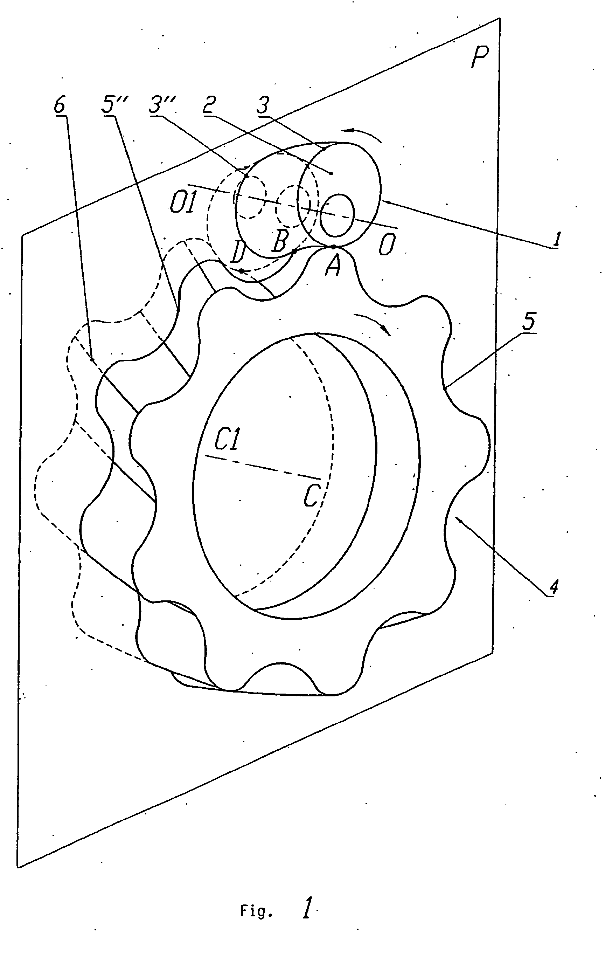

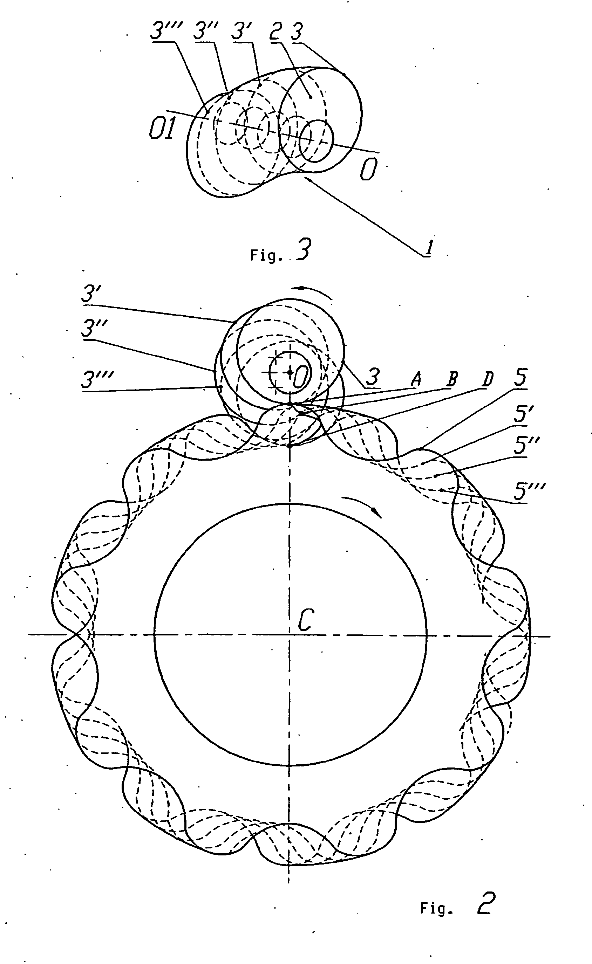

In Fig. 1 sind beide Räder in der Verzahnung zylindrisch, das kleinere Rad ist ein Ritzel 1 mit einem krummlinigen Zahn. Der Stirnschnitt 2 des Zahnrades 1 stellt einen Kreis 3 dar, der bezüglich der Achse des Rads OO1 exzentrisch verschoben ist. Die Oberfläche des Zahns des Ritzels 1 wird von einer ununterbrochenen Absetzung des Kreises 3 entlang der Achse OO1 und ihrer gleichzeitigen Verdrehung um diese Achse gebildet. Oder, was dasselbe ist, die Oberfläche des Zahns des Ritzels 1 ist von einer ununterbrochenen Verdrehung der konsequenten Stirnschnitte 2 des Ritzels 1 um die Achse OO1 gebildet. In Fig. 2 und 3 sind die Kreise der einzelnen bildenden Schnitte des Ritzels 1, die in Hinsicht zueinander um 45 Grad verdreht sind, mit 3 ', 3 ", 3 "' bezeichnet. Die Außenform des Ritzels 1 stellt einen Schraubenexzentriker dar. Das Zahnprofil des größeren zylindrischen Rads 4 hat im Stirnschnitt die Form einer Zykloide-Kurve 5. Die zykloidale Kurve 5 wird in der gegebenen Beschreibung im weitesten Sinn des Worts verstanden, es sind dies die Äquidistanten, die Epi - und die Hypozykloiden. Unter anderem für das Außenrad 4 in Fig. 1 ist die Kurve 5 eine Äquidistante der Epizykloide. Die Linie der Gipfel 6 der zykloidalen Zähne hat eine Schraubenform, d.h. die Zähne des Rads 4 befinden sich von der konsequenten Absetzung und der gleichzeitigen Verdrehung der zykloidalen Kurve 5 entlang der Achse CC1 des Rads 4. Die einzelnen zykloidalen Kurven der Schnitte des Rads 4 sind in Hinsicht zueinander um die Achse CC1 um 45/9 = 5 Grad verdreht und mit 5, 5 ', 5 " 5 "' bezeichnet.

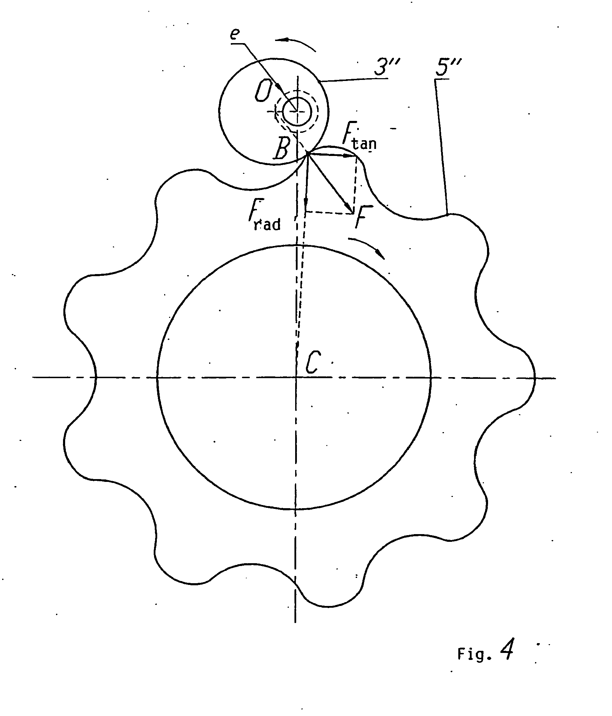

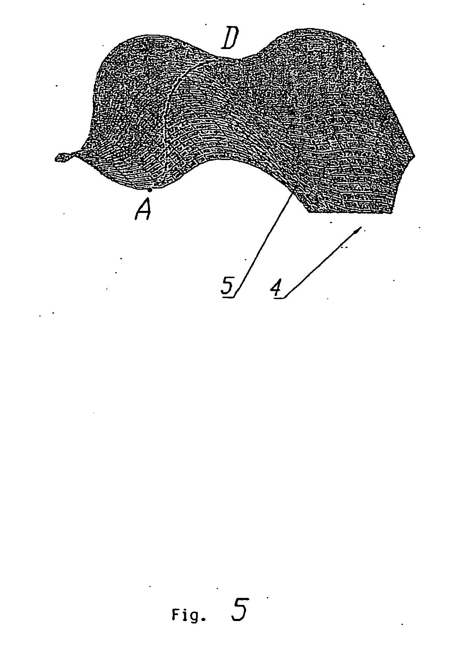

Wie aus dem Schema zur Bildung der gezahnten Oberfläche des Schraubenexzentrikers 1 sichtbar ist, hat die letzte Oberfläche in jedem Querschnitt einen Kreis 3. Dieser Kreis 3 hat in jedem Querschnitt einen Berührungspunkt mit der zykloidalen Kurve 5 des größeren Rads 4 (auf Fig. 1 und 2 ist der Punkt der Berührung der Profile der Räder in der vorderen frontalen Ebene mit A bezeichnet). Auf Fig. 4 ist der Schnitt der Verzahnung von der Ebene P, senkrecht zu den Achsen der Räder (siehe Fig. 1) dargestellt. In dieser Ebene ist der Kreis 3 " des Schnitts 2 des Schraubenexzentrikers um die Achse OO1 um 90 Grad bezüglich des Kreises 3 auf der Stirnseite des Rads verdreht. Die zykloidale Kurve 5 " ist um den Winkel 90/z Grad in Bezug zur zykloidalen Kurve 5 auf der Stirnseite des Rads verdreht, wobei z die Zahl der Perioden der zykloidalen Kurve ist. Das heißt, die Verdrehung des Kreises 3 " auf ein Viertel der Verdrehung entspricht der Verdrehung der zykloidalen Kurve 5 " auf ein Viertel ihres Winkelschritts. Der Kreis 3 " berührt die zykloidale Kurve 5 " im Punkt B. Also in jedem Querschnitt berührt der Kreis im Schnitt des Schraubenexzentrikers 1 die zykloidale Kurve im Schnitt des Rads 4, und der Schraubenzahn des Zahnrads 1 hat gleichzeitig Kontaktpunkte mit dem schrauben-zykloidalen Zahn des Rads 4. Diese Punkte bilden eine ununterbrochene Schraubenlinie des Kontaktes ABD. Auf Fig. 5 wird das Fragment des zykloidalen Zahnrads 4 und die Linie AD des Kontakts des Schraubenexzentrikers mit ihm gezeigt, erreicht durch die Methode der Computermodellierung. So kann man die Verzahnung wie die Gesamtheit einer Menge der Eingriffe kreisförmiger Bolzen und der zykloidalen Kurve in verschiedenen Phasen des Eingriffs betrachten. Aus der Theorie der Zahnradgetriebe ist es bekannt, dass der Zykloide-Bolzen-Eingriff vorzugsweise mit einer Rollenreibung [siehe zum Beispiel BSE, der Artikel "Zahnradgetriebe"] arbeitet, d.h. die angebotene Verzahnung hat kleine Verluste durch Reibung. Außerdem hat der Eingriff der kreisförmigen und zykloideförmigen Zähne maximal mögliche Radien der Krümmung, was die Belastungsfähigkeit des Getriebes wesentlich vergrößert. Die hohe Übertragungszahl in einer Stufe wird, wie auch im Prototyp, mit einer minimalen Zähnezahl des Ritzels gleich 1 gewährleistet. Die Exzentrik und die zykloidalen Zähne haben praktisch keine Stiele, weshalb sie nur unter den Bedingungen der Kontaktbelastungen arbeiten, im Unterschied zum Evolventenprofil, das auf Biegung arbeitet. Es ist bekannt, dass damit die Kontakthaltbarkeit des Materials wesentlich höher ist als die Haltbarkeit auf Biegung.

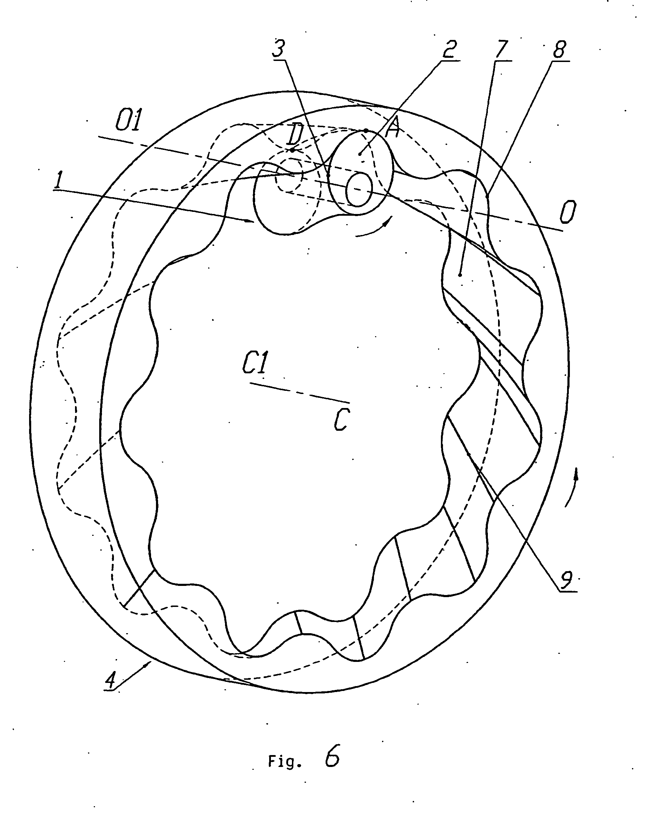

In der Verzahnung in Fig. 6 hat das größere Rad 4 ein inneres gezahntes Profil 7, das von der Absetzung der zykloidalen Kurve 8 entlang der Achse CC1 mit ihrer gleichzeitigen Verdrehung gebildet ist und eine Äquidistante der Hypozykloide darstellt. Daraufhin bildet das Zahnrad 4 einen inneren Eingriff, bei dem die Köpfe der Zähne eine Schraubenlinie 9 bilden. Der Schraubenexzentriker 1 hat dieselbe Form, die von der Verdrehung des Kreises 3 um die Achse OO1 und von der Absetzung entlang dieser Achse gebildet ist (der exzentrisch verschobenen Achse OO1). Der Punkt der Berührung des Kreises 3 des Schrauben- Exzentrikers 1 mit der hypoidalen Kurve 8 in der vorderen frontalen Ebene des Eingriffs ist in Fig. 6 mit A bezeichnet und in der hinteren frontalen Ebene mit D. Der Schraubenexzentriker 1 hat einen ununterbrochenen Kontakt mit dem gezahnten Profil 7 des inneren Eingriffs entlang der Linie AD.

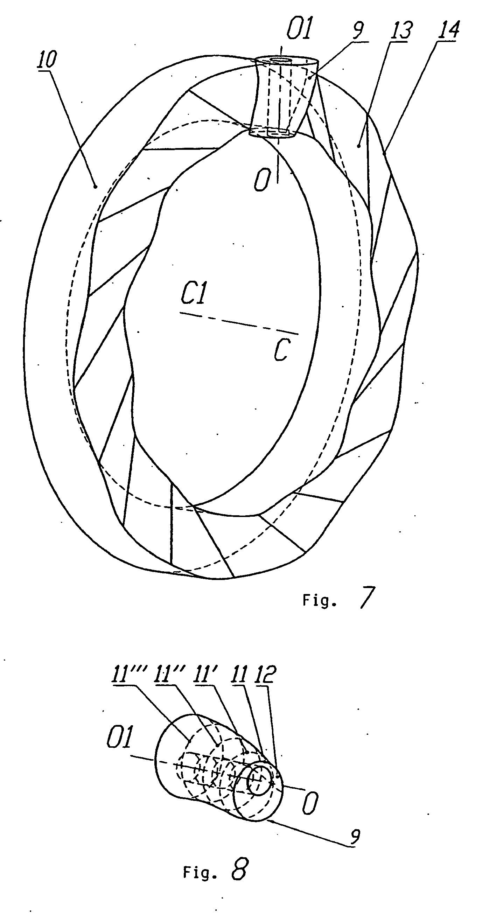

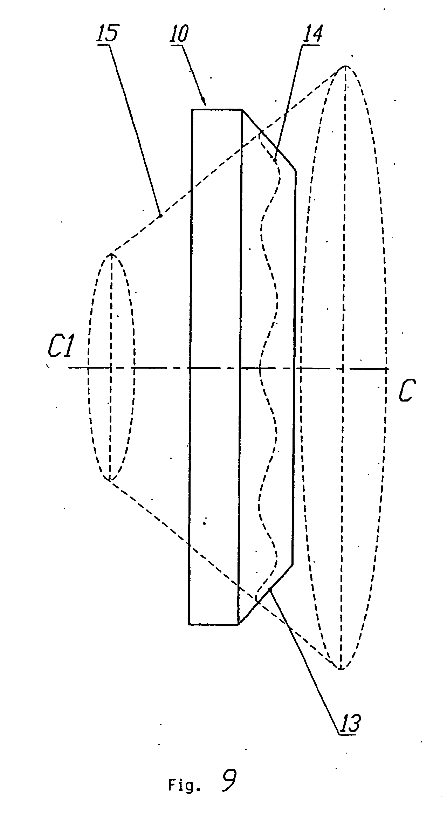

Wir betrachten jetzt eine Verzahnung der konischen Räder in Fig. 7. Das kleine Rad 9 der Verzahnung (das Ritzel 9) und das große Rad 10 haben konische Form und sich kreuzende Achsen OO1 und CC1. Das Ritzel 9 ist gebildet von der konsequenten und ununterbrochenen Verdrehung entlang der exzentrisch verschobenen Achse OO1 der Kreise 11 in den Stirnschnitten 12 des Kegels, der die Form des konischen Rads bestimmt. Fig. 8 illustriert die Bildung der Oberfläche des konischen Schraubenexzentrikers. Als Zahlen 11 ', 11 ", 11 "' sind die Kreise in verschiedenen Schnitten bezeichnet, verdreht in Hinsicht zueinander und bezüglich des Kreises 11 in der vorderen frontalen Ebene um 45 Grad. Wie aus der Zeichnung sichtbar ist, unterscheidet sich der konische Schraubenexzentriker 9 vom zylindrischen Schraubenexzentriker 1 nur durch die sich ändernden Umfänge der Kreise in den konsequenten Stirnschnitten. Entsprechend hat die gezahnte Oberfläche 13 des größeren konischen Rads 10 in den Stirnschnitten die Form einer zykloidalen Kurve 14 (siehe Fig. 9). Die Stirnschnitte des konischen Rads sind seine Schnitte von seinem zusätzlichen Kegel 15. Die Zähne des Rads 10 haben Schraubenform und werden von der konsequenten Verdrehung der zykloiden Kurven 14 in seinen Schnitten um die Achse CC1des Rads gebildet. Bei dieser Bildung der Oberfläche des konischen Schraubenexzentrikers 9 und der gezahnten Oberfläche 13 des konischer Rads 10 haben sie in jedem Querschnitt einen Kontaktpunkt, in dem sich der Kreis und die zykloidale Kurve im Kontakt befinden, wobei die im Eingriff befindlichen Punkte minimale Verluste durch Gleitreibung haben. Alle übrigen beschriebenen Vorteile für den Eingriff der zylindrischen Räder gelten auch für die konischen Räder.

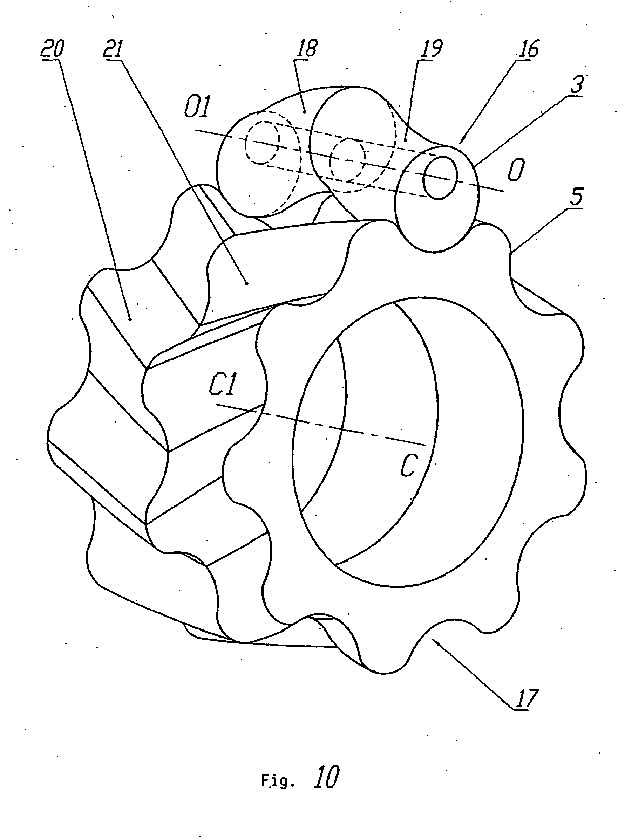

In den Verzahnungen der zylindrischen Räder auf Fig. 1 und 6 ist eine axiale Komponente der Kraft gegeben, die die Räder auseinander stößt und sich schädlich auf die Kraftcharakteristiken der Verzahnung auswirkt. Bei kleinen Winkeln der Neigung der Zähne kann man diese Komponente vernachlässigen. Bei großen Winkeln der Neigung werden Pfeilräder (siehe Fig. 10) verwendet. Das Ritzel (der Schraubenexzentriker 16) und das große Rad 17 sind als Pfeilräder ausgeführt. Der Schraubenexzentriker 16 hat in seiner Länge zwei "Schenkel" 18 und 19, die von Schraubenoberflächen mit entgegen gesetzter Richtung gebildet sind. Der Kreis 3 im Stirnschnitt des Schraubenexzentrikers 16 auf dem Abschnitt 19 verläuft bei ununterbrochener Verdrehung um die exzentrisch verschobene Achse OO1 im Uhrzeigersinn und auf dem Abschnitt 18 gegen den Uhrzeigersinn. Genauso besteht der gezahnte Kranz des großen Rads 17 aus zwei Abschnitten 20 und 21 mit rechten und linken zykloidalen Zähnen, die bei der Verdrehung der zykloidalen Kurve 5 gebildet sind. Es ist offensichtlich, dass infolge der Symmetrie der Anordnung der Zähne die axialen gebildeten Kräfte in der Pfeilradverzahnung sich gegenseitig ausgleichen.

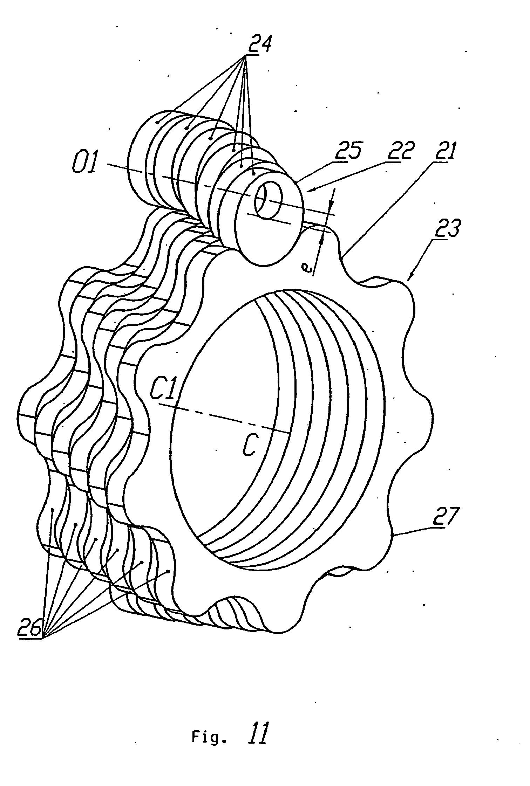

Bei allen Vorzügen ist die angebotene Exzentrik-Zykloide-Verzahnung in der Herstellung sehr kompliziert und erfordert Mehrkoordinatenwerkbänke mit CNC. In der Variante mit den zusammengesetzten Rädern kann diese Idee der Verzahnung mit einfacherer Ausrüstung realisiert werden. Der Eingriff der zusammengesetzten Außenräder ist in Fig. 11 dargestellt. Hier werden beide Räder 22 und 23 als zusammengesetzte Räder, bestehend aus einigen in Hinsicht zueinander verdrehten Kränzen ausgeführt. Das kleine Rad (das Ritzel 22) ist aus sechs Kränzen 24 gebildet, von denen jeder bezüglich der Achse OO1 auf die Größe einer Exzentrizität ε exzentrisch verschoben einen Kreis 25 darstellt. Die Kreise 25 benachbarter Kränze sind um die Achse OO1 in Hinsicht zueinander um einen Winkel, größer oder gleich 180 Grad /Zahl der Kränze verdreht, und bilden einen zusammengesetzten Exzentriker 22. Für sechs Kränze in Fig. 11 beträgt dieser Winkel 30 Grad. Dies bedeutet, dass eine axiale Überdeckung des zusammengesetzten Exzentrikers 22 mehr als 180 Grad beträgt und die Übersetzungszahl konstant bleibt. Das größere Rad 23 ist auch aus sechs Kränzen 26 gebildet, von denen jeder die Form einer umbiegenden Epizykloide 27 hat. Die zykloidalen Profile der benachbarten Kränze sind in Hinsicht zueinander um einen Winkel 30/z Grad verdreht, wobei z die Zahl der Zähne des zykloidalen Kranzes ist. Hier kontaktiert jedes Paar der Kränze 24 und 26 die beiden zusammengesetzten Räder entlang einer geraden Linie, wobei die allgemeine Linie des Kontakts der Profile eine stückweise durchgehende gebrochene Kurve darstellt. Der Eingriff der zusammengesetzten Räder hat kein Problem mit der axialen bildenden Kraft, da man diesen Eingriff wie eine Superposition der doppelten Verzahnungen einzelner Kränze mit geraden Zähnen betrachten kann. Es ist zu bemerken, dass die Zahl der Kränze der zusammengesetzten Räder vergrößernd wirkt, wenn wir uns der Schraubenvariante des Eingriffs nähern. Seinerseits kann man die Schrauben-Exzentrik-Zykloide-Verzahnung wie eine Verzahnung von zusammengesetzten Rädern betrachten, wo die Zahl der Kränze unendlich groß und der Winkel der Verdrehung zwischen den benachbarten Kränzen unendlich klein ist.

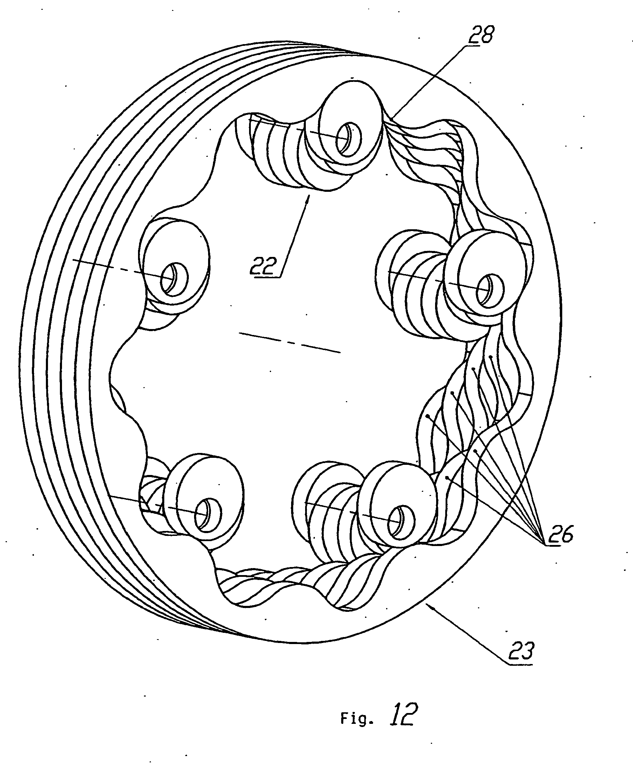

Der Eingriff der zylindrischen zusammengesetzten Räder auf Fig. 12 unterscheidet sich vom Eingriff auf Fig. 11 nur vom inneren Profil 28 der Kränze 26 des größeren Rads 23. Das Ritzel 22 hat dieselbe Form des zusammengesetzten Exzentrikers wie auch in Fig. 11.

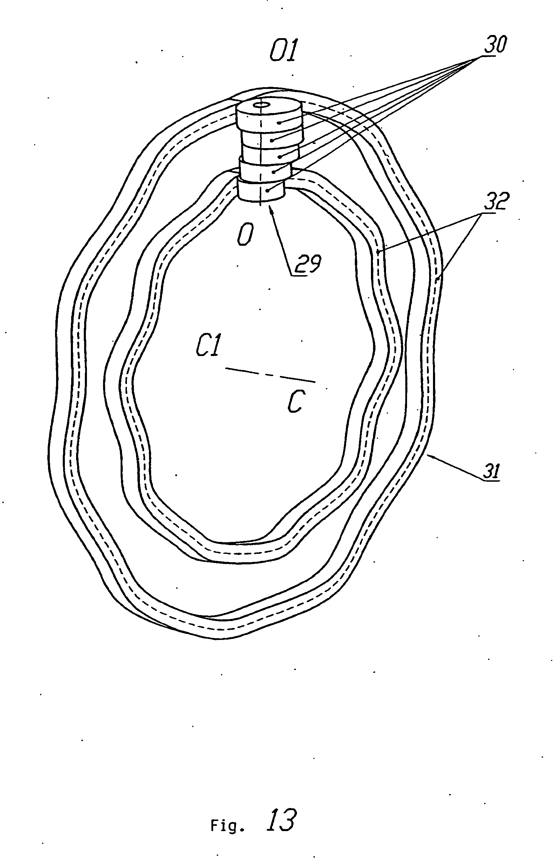

Die Variante mit zusammengesetzten Rädern kann auch für konische Räder mit sich kreuzenden Achsen realisiert werden (siehe Fig. 13). Hier ist das kleine konische Rad (das Ritzel 29) aus einzelnen exzentrikalen Kränzen 30 zusammengesetzt, die einen Zylinder mit sich verringerndem Durchmesser darstellen. Das Profil jedes Kranzes 30 stellt bezüglich der Achse OO1 des Rads exzentrisch verschoben einen Kreis dar. Die einzelnen Kränze sind in Hinsicht zueinander um einen Winkel, größer oder gleich 180 Grad/n, wobei n die Zahl der Kränze ist, verdreht. In Fig. 13 ist die Zahl der Kränze gleich 5, und der Winkel zwischen ihnen ist 36 Grad. Das größere Rad 31 ist auch aus einzelnen Kränzen 32 gebildet, die das Stirnprofil der zykloidalen Formen haben. Dabei sind die benachbarten Kränze in Hinsicht zueinander um 1/5 des Winkelschritts des zykloidalen Kranzes 32 verdreht. Auf dieser Fig. 13 sind für die Klarheit der Darstellung nur die Außenkränze des größeren Rads 31 gezeigt. Die Zahl der Kränze der zusammengesetzten Räder vergrößernd, werden wir uns einer Schrauben-Exzentrik-Zykloide-Verzahnung der konischen Räder nähern.

Wir betrachten nun die Arbeit einer Exzentrik-Zykloide-Verzahnung mit einem Schraubenexzentriker, die in den Fig. 1 - 5 dargestellt ist. Beim Drehen des Schraubenexzentrikers 1 um die Achse OO1 kontaktiert dieser in Bezug auf die Achse den exzentrisch gelegenen Kreis 3 (3 ', 3 ", 3 "' usw.) in jedem Querschnitt des Rads 1 mit dem zykloidalen Profil des größeren Rads 4 im selben Schnitt. So auch, wenn sich der Schraubenexzentriker 1 gegen den Uhrzeigersinn dreht, wie auf den Figuren gezeigt ist. Der Kreis 3 in der frontalen Ebene der Verzahnung (siehe Fig. 2), den Kopf des zykloidalen Zahns 5 beim Verdrehen um das Zentrum O kontaktierend, beginnt auf den Zahn zu drücken und löst so die Verdrehung des größeren Rads 4 in der Gegenrichtung um eine Größe aus, die der Hälfte seines Winkelschritts entspricht. Nach der Hälfte der Umdrehung des Schraubenexzentrikers 1 ist der Kreis 3 in Kontakt mit einer Vertiefung des zykloidalen Rads 4 gelangt, und auf der nächsten Hälfte der Verdrehung ist in diesem Schnitt die Krafteinwirkung auf das Rad 4 gleich 0. Ähnliche Überlegungen kann man auch für die anderen Stirnschnitte der Räder ansetzen, wo sich der Kraftkontakt der gestoßenen Profile nur auf der Hälfte der Verdrehung des Schraubenexzentrikers 1 auswirkt. Wenn dabei der Winkel der axialen Überdeckung des Schraubenexzentrikers 1 gleich oder mehr als 180 Grad ist, so entspricht der Kraftkontakt der vollen Verdrehung des Exzentrikers 1. Dies bedeutet, dass das Drehen des Rads 4 ununterbrochen ist und für ein Verdrehen des Schraubenexzentrikers 1 sich das Rad 4 um einen Zahn dreht. D.h. die Übersetzungszahl des Eingriffs ist der Zahl des größeren Rads gleich, und das Drehen der Räder ist entgegengesetzt.

In Fig. 4 sind die Wirkung und die Verteilung der Kräfte im Mittelschnitt der Verzahnung gezeigt. Die Kraft F hat zwei Komponenten: F_{rad} - eine radiale und Fₜₐₙ - eine tangentiale. Die Letzte übergibt das Moment des Verdrehens. Da die Zähne der Räder eine Schraubenform haben, so erscheint in der Exzentrik-Zykloide-Verzahnung, wie auch in einer gewöhnlichen Schrägverzahnung, die axiale Komponente. Für ihre Beseitigung kann man eine Pfeilverzahnung verwenden (siehe Fig. 10), wenn eine Hälfte des Schraubenexzentrikers in der einen Richtung Schraubenzähne 18 hat, und die andere Hälfte in der entgegengesetzten Richtung mit Schraubenzähnen 19 ausgeführt ist. Genauso ist aus zwei Abschnitten mit rechten und linken Schraubenzähnen das Pfeilprofil auf dem größeren Rad ausgeführt. Daraufhin entstehen in jedem der zwei Abschnitte axiale Komponenten der Kräfte in Gegenrichtungen und heben sich gegenseitig auf.

Die Innenverzahnung in Fig. 6 arbeitet auf die gleiche Weise. Der einzige Unterschied besteht darin, dass in der frontalen Ebene der Verzahnung der Kraftkontakt des exzentrischen Kreises 3 und der zykloidalen Kurve 8 in der Vertiefung des Zahns des größeren Rads 4 anfängt und auf seinem Gipfel zu Ende geht. Die Räder drehen sich beiläufig.

Die Arbeit der Verzahnung der konischen Räder in Fig. 7 ist identisch, nur ist dank der konischen Zähne das Verdrehen zwischen den Rädern mit den sich kreuzenden Achsen übergeben. Die Arbeit der Verzahnung der gestuften Außen- und Innenräder in den Fig. 11 und 12 sowie der konischen Räder in Fig. 13 ist der Arbeit der Verzahnung der Räder mit krummlinigen Schraubenzähnen in Fig. 1, 6 und 7 ähnlich, da es ein Sonderfall der Verzahnung der Räder mit Schraubenzähnen ist.

Auf der Grundlage der Exzentrik-Zykloide-Verzahnung kann man einen einfachen planetarischen Mechanismus 2K-N nach dem Schema James aufbauen. Es ist konstruktiv einfacher, diesen Mechanismus in Form eines Moduls mit drei sich in Hinsicht zueinander drehenden beweglichen Gliedern zu erstellen, wie in den Fig. 14 bis 19 vorgestellt ist. Jedoch kann der Mechanismus auch traditionell in Form eines bewegungsunfähigen Gehäuses konstruiert sein, in dem führende und getriebene Wellen montiert sind, die mit den beweglichen Gliedern des Mechanismus verbunden sind.

Der Mechanismus in Fig. 14 und 15 enthält ein zentrales Außenrad 33, das nebenbei mit einer durchgehenden führenden Welle 34 ausgeführt ist. Der Schnitt des Rads 33 stellt einen exzentrisch verschobenen Kreis (den Exzentriker) 35 dar, der ein Profil eines einzigen Zahns des Rads 33 ist. Auf die durchgehende Welle 34 in den Lagern 36 und 37 ist ein Planetenträger 38 aufgesetzt. Dies stellt zwei untereinander hart befestigte Discussen 39 und 40 mit Ausschnitten 41 für die Unterbringung von Satelliten 42 dar. Mit 43 ist die Schraube für die Befestigung der Discussen 39 und 40 bezeichnet. In den Discussen 39 und 40 des Planetenträgers 38 sind im Bereich der Ausschnitte 41 die Achsen 44 gesetzt. Auf den Achsen 44 aus den Lagern 45 sind die Satelliten 42 aufgesetzt. Die Satelliten haben einen gezahnten Kranz 46 in Form der Zykloide, die sich mit dem Exzentriker 35 des zentralen Rads 33 verzahnt. Bei weniger als drei Satelliten 42, zum Beispiel bei zwei Satelliten, im Eingriff des Exzentrikers 35 mit den zykloidalen Zähnen 46 erscheinen "die toten" Zonen, in denen das Moment nicht übergeben wird. Bei drei Satelliten im Eingriff mit dem Kreis 35 befindet sich mindestens ein Satellit in beliebiger Lage. Bei größerer Zahl der Satelliten nimmt die Gleichmäßigkeit der Übertragung des Moments vom Rad 33 auf die Satelliten 42 zu.

Das zweite zentrale Innenrad 47 ist von einer Außennabe 48 hergestellt, die aus den Lagern 49 und 50 auf die Discussen 39 und 40 des Planetenträgers 38 montiert ist. Der gezahnte Kranz des Rads 47 ist in der Art von Bolzen 51 ausgeführt, die frei auf Achsen 52 gesetzt sind, die in der Außennabe 48 befestigt sind. Die zykloidalen Zähne der Satelliten 46 greifen in die Bolzen 51. Hier ist zu bemerken, dass der gezahnte Kranz des Innenrads auch als zykloidaler Kranz erstellt werden kann, wie in Fig. 19 gezeigt ist. Die Zykloide und die Bolzen sind zwei Varianten des gezahnten Profils, das sich im Eingriff mit dem zykloidalen Profil 46 der Satelliten 42 befindet. Die Auswahl des Profils hängt von den konkreten Anforderungen ab, die dem Getriebe zu Grunde gelegt sind Die Zykloide-Bolzen-Verzahnung hat einen erhöhten Wirkungsgrad, ist aber in der Herstellung komplizierter. Deshalb ist bei harten Anforderungen an den Wirkungsgrad eine Bolzenverzahnung gewählt. Wenn für das Getriebe die Technologiegerechtigkeit und der Preis des Erzeugnisses eine wichtigere Charakteristik sind, so ist für das Rad 47 und für die Satelliten 42 eine Zykloide-Verzahnung zu wählen.

So stellt der planetarische Mechanismus das Modul von drei koaxialen und sich drehenden in Hinsicht aufeinander beweglichen Glieder dar: die Welle 34, der Planetenträger 38 und das Rad 47. Ist eines von ihnen mit der Welle eines Motors, das andere mit der getriebenen Welle und das dritte mit dem bewegungsunfähigen Gehäuse verbunden, dann erhält man Getriebe mit verschiedenen Übersetzungszahlen. Als Elemente der Verbindung sind in Fig. 14 für die Welle 34, den Längskeil 53, für den Planetenträger 38 und für das Rad 47 Gewindebohrungen 54 und 55 gezeigt. Am geeignetsten ist als Gehäuseelement das Außenrad 47. Dann erhält man bei der Vereinigung der Welle 34 mit dem Motor und dem Planetenträger 38 mit der getriebenen Welle ein Reduziergetriebe nach dem Schema James. Die Übersetzungszahl für dieses Schema ist ebenso wie bei gewöhnlichen Evolventen-Planetarischen-Getrieben i, wobei i=1 - Z₄₇/Z₃₃ wobei Z₄₇/Z₃₃ das Verhältnis der Anzahl der Zähne des Innenrads 47 zur Zahl der Zähne des Sonnenrads 33 ist. Im vorliegenden Fall ist die minimal mögliche Zahl der Zähne des Rads 33 gleich 1 und die Übersetzungszahl 1 - Z₄₇ = - 22, d. h. sie entspricht dem negativen absoluten Wert der Zahl der Bolzen 51 weniger eins. Das bedeutet, dass das Drehen der getriebenen Welle zur der führenden Welle in Gegenrichtung geschieht. Beim Antrieb von der Seite des Planetenträgers 38 und bei getriebener Welle 34 ist das Getriebe ein Multiplikator mit derselben Übersetzungszahl. Im Falle des bewegungsunfähigen Planetenträgers 38 und des getriebenen Rads 47 ist ein Getriebe mit positiver Übersetzungszahl erhalten, die gleich der Zahl der Zähne des Rads 47 ist, d.h. der Zahl der Bolzen 51.

Für das Getriebe mit einer Evolventenverzahnung in denselben Abmessungen und mit vergleichbarer Belastungsfähigkeit ist die Übersetzungszahl sechs- bis zehnmal geringer, da die minimal mögliche Zahl der Zähne des Ritzels gleich 6 und in der Regel nicht weniger als 10 ist. Bei vergleichbaren Übersetzungszahlen und Abmessungen hat der Mechanismus mit einer Exzentrik-Zykloide-Verzahnung eine mehrmals höhere Belastungsfähigkeit, die durch die kleinere Zahl der Zähne der Räder bedingt ist (und entsprechend von den großen Abmessungen des Zahns).

Nun wird der Mechanismus in Fig. 16 und 17 behandelt. Sein Hauptunterschied zum vorhergehenden Mechanismus besteht darin, dass das Außenrad 33 aus zwei Kränzen 35a und 35b zusammengesetzt ist. Jeder Kranz stellt im Schnitt einen exzentrischen Kreis dar. Die Kränze des zusammengesetzten zweikränzigen Rads sind in Hinsicht zueinander um die Hälfte eines Winkelschritts gedreht, der für ein einzahniges Rad 180 Grad beträgt. D.h. die Exzentriker 35a und 35b sind bezüglich der Getriebeachse nach entgegengesetzten Seiten verschoben. Mit dem Kranz 35a des Rads 33 wirken die zykloidalen Kränze 46a und die drei Satelliten 42a, die in einer anderen Ebene längs der Getriebeachse angeordnet sind, zusammen. Mit dem Kranz 35b würden die Kränze 46b und auch die drei Satelliten 42b zusammenwirken, die in eine andere Ebene entlang der Getriebeachse verlagert sind. Alle sechs Satelliten 42a und 42b sitzen mit der Möglichkeit des Drehens auf sechs Achsen 44, die in den Discussen 39 und 40 des Planetenträgers 38 befestigt sind. Alle Satelliten 42 sind mit ihren Kränzen 46 mit einem Kranz des Innenrads 47 verzahnt. Das Innenrad 47 hat für die Vereinfachung der Montage eine Nabe 48, die aus zwei Hälften gebildet ist - 48a und 48b. Die Elemente ihrer Befestigung werden in Fig. 16 nicht gezeigt. In der Nabe 48 auf den Achsen 52 ist der bildende Kranz des Rads 47 mit Bolzen 51 freigesetzt.

In diesem Getriebe ist die Gleichmäßigkeit des Drehens der Räder erhöht, da der Leistungsstrom vom Rad 33 zum Rad 47 durch alle 6 Satelliten gleichzeitig übergebbar ist. Dank der Verlagerung der Satelliten 42a und 42b in die parallelen Ebenen ist der Umfang der Satelliten maximal für den geforderten Abstand zwischen den zentralen Rädern 33 und 47 wählbar, da sich die benachbarten Satelliten 42a und 42b in verschiedenen Ebenen befinden und sich nicht überschneiden. Das Getriebe hat eine vergrößerte Zahl der Achsen 44 des Planetenträgers 38. Die Discussen 39 und 40 des Planetenträgers sind über die Achsen 44 hart miteinander verbunden. Die Elemente der Befestigung des Planetenträgers 38 und der zentralen Räder 33 und 47 zu den Gliedern der äußerlichen Mechanismen sind der Einfachheit halber nicht gezeigt. Sie können in jeder bekannten Art, zum Beispiel als Gewinde-, Federverbindung oder Keilwellenverbindung, ausgebildet sein. Alle übrigen Details in Fig. 16 und 17 sind ebenso wie auch in den Fig. 14 und 15 bezeichnet.

Im Getriebe in Fig. 18 und 19 bleibt beim Eingriff des Rads 33 auch mit sechs Kränzen der Satelliten die Zahl der Achsen des Planetenträgers 38 gleich der Zahl wie in Fig. 15. Hier sind in beiden Verzahnungen die Räder aus zwei Kränzen zusammengesetzt, die in Hinsicht zueinander um die Hälfte des Winkelschritts verdreht sind. Die Kränze des Rads 33 sind die exzentrischen Kreise 35a und 35b, die in die entgegengesetzte Seite der Achse des Getriebes verschoben sind. Die drei Satelliten 42 sitzen über die Lager 45 auf drei Achsen 44 und haben je zwei zykloidale Kränze 46a und 46b. Die Kränze 46a und 46b sind in Hinsicht zueinander um die Hälfte des Winkelschritts verdreht. Das Innenrad 47 ist auch zusammengesetzt. Es hat zwei Naben 48a und 48b, welche miteinander verbunden sind. Die Elemente der Befestigung sind der Einfachheit halber nicht gezeigt. Jede der Naben ist mit ihrem eigenen Innenkranz 56a und 56b ausgeführt. Die Kränze 56a und 56b sind in Hinsicht zueinander um die Hälfte des Winkelschritts verdreht. Die Kränze 56 haben die zykloidale Form, die den zykloidalen Zähnen der Kränze 46 der Satelliten 42 entspricht.

In Fig. 18 sind die Kränze 42a und 42b der Satelliten nicht miteinander verbunden. Sie sitzen einfach auf den Achsen 44, die in den Lagern 45a und 45b gelagert sind. Aber es ist auch eine andere Variante dieser Konstruktion möglich, wenn die Kränze der Satelliten miteinander hart verbunden sind (oder als ein Ganzes ausgebildet sind). Die Konstruktion mit den verbundenen Kränzen weist eine große Härte und Genauigkeit der Position auf. Die Konstruktion mit freien Kränzen der Satelliten lässt die Wahl der Spielräume und die Beseitigung der Fehler der Herstellung zu.

Es ist zu bemerken, dass die zusammengesetzten Räder mit einer großen Anzahl an Kränzen ausgestattet sein können, die in Hinsicht zueinander um den Winkelschritt dividiert durch die Zahl der Kränze verdreht sind. Die Vergrößerung der Zahl der Kränze verkompliziert die Konstruktion, vergrößert aber die Gleichmäßigkeit der Arbeit und die Genauigkeit des Getriebes.

Der angebotene planetarische Mechanismus arbeitet genauso, wie auch der gewöhnliche planetarische Mechanismus mit einer Evolventenverzahnung, erstellt nach dem Schema James. Der Unterschied besteht nur in einer Vergrößerung der Übersetzungszahl auf Kosten der Reduzierung der Anzahl der Zähne des Außenrads 33 auf einen Zahn. Die Formeln für die Bestimmung der Übersetzungszahl sind für die verschiedenen Schemen der Verbindung des Getriebes mit den Wellen der Außenmechanismen oben genannt. Für die Getriebe in den Fig. 14 und 15 sowie 18 und 19 beträgt die Übersetzungszahl bei der führenden Welle 34 und dem getriebenen Planetenträger 38 22. Für das Getriebe in Fig. 16, 17 bei diesem Schema des Einschlusses beträgt die Übersetzungszahl 19.

Es werden jetzt die planetarischen Mechanismen nach dem Schema Davids behandelt, dessen Arten in den Fig. 20 bis 27 wiedergegeben sind. Der planetarische gezahnte Mechanismus in Fig. 20 und 21 enthält zwei zentrale Außenräder 57 und 58 und doppelte Satelliten 59, die in den Planetenträger 60 eingesetzt sind. Die erste Reihe der Räder 62 der doppelten Satelliten 59 und das zentrale Rad 57, das sich mit ihnen im Eingriff befindet, bilden eine erste Reihe der Verzahnung. Die zweite Reihe der Räder 63 der doppelten Satelliten 59 zusammen mit dem zweiten zentralen Rad 58 bilden eine zweite Reihe der Verzahnung. In der ersten Reihe sind das Rad 57 und die Räder 62 der Satelliten in Form von Evolventenzähnen 61 und 64 normal verzahnt (siehe Fig. 21). Die Kränze 65 der zweiten Räder 63 der Satelliten 59 in der zweiten Reihe des Eingriffs werden einzahnig mit dem Profil in Form von exzentrisch verschobenen Kreisen ausgeführt. Das zweite zentrale Rad 58 hat einen zykloidalen gezahnten Kranz 66. D. h. die Räder 63 der Satelliten und das Rad 58 bilden eine Reihe der Exzentrik-Zykloide-Verzahnung. Die Zahl der Kränze 65 der Satelliten in der Reihe der Exzentrik-Zykloide-Verzahnung sollte nicht weniger als drei sein. In Fig. 21 ist sichtbar, dass sich nur in diesem Fall gleichzeitig ein oder mehrere einzahnige exzentrikaidale Kränze 65 in der Phase des Eingangs im Eingriff befinden. Bei kleinerer Zahl an Kränzen der Satelliten und wenn sich alle Kränze 65 in der Phase des Ausgangs aus dem Eingriff mit dem zykloidalen Kranz 66 des zentralen Rads 58 befinden, entstehen solche Positionen dieser Kränze, dass das Drehen vom Rad 59 des Satelliten an das Rad 58 nicht übergebbar ist.. Im Mechanismus, der in Fig. 21 gezeigt ist, ist die Zahl der Kränze 65 der Satelliten in der Reihe des Eingriffs gleich der Zahl der Satelliten. Wenn die Räder im Eingriff jedoch gestuft und aus in Hinsicht zueinander identisch verdrehten gleichen Kränzen sind, so ist die Zahl der Satelliten kleiner als die Zahl der Kränze, und der Mechanismus ist mit zwei oder sogar nur einem Satelliten arbeitsfähig. Dies wird bei der Erörterung der Fig. 24 im Einzelnen erläutert. Der in Fig. 20 und 21 vorgestellte planetarische Mechanismus ist differential, da alle seine drei Hauptglieder (die zentralen Räder 57 und 58 und der Planetenträger 60) beweglich sind. Um ein mechanisches Getriebe zu erhalten, ist es nötig, eines dieser Glieder bewegungsunfähig zu machen. Je nach der Auswahl des bewegungsunfähigen Glieds und der führenden und getriebenen Glieder hat das Getriebe verschiedene Übersetzungszahlen und kann sowohl ein Multiplikator als auch ein Reduziergetriebe sein.

Im Falle eines Antriebsrads 57, eines getriebenen Rads 58 und eines bewegungsunfähigen Planetenträgers 60 bestimmt sich die Übersetzungszahl des Mechanismus nach dem Schema Davids aus i₅₇₋₅₈ = Z₆₂/Z₅₇ - Z₅₈/Z₆₃ und da für die Exzentrik-Zykloide-Verzahnung Z₆₃ = 1, so ist i₅₇₋₅₈ = Z₆₂ - Z₅₈/Z_{5*7} und für eine reale Konstruktion nach Fig. 1 und 3 ist i₅₇₋₅₈ gleich 23,5. Im Falle des getriebenen Planetenträgers 60 und des bewegungsunfähigen Rads 58 kann sich die Übersetzungszahl aus i₅₇₋₆₀ = 1 - Z₆₂-Z₅₆/Z₅₇ = - 22,5 berechnen So ist die Übersetzungszahl des angebotenen Mechanismus theoretisch in Z₆₃ (d. h. sechs- bis zehnmal) größer als beim Mechanismus mit einer gewöhnlichen Evolventenverzahnung in beiden Reihen. Es ist zu bemerken, dass für das Reduziergetriebe die evolvente Reihe besser auf der Antriebsseite auszuführen ist, da die Exzentrik-Zykloide-Verzahnung höhere maximalzulässige Momente des Drehens hat. In der Exzentrik-Zykloide-Verzahnung wirken das konvexe Profil des Zahns (des Exzentrikers 65) mit dem konkaven Profil des zykloidalen Zahns 66 zusammen, was ihre Kontakthaltbarkeit unter sonst gleichen Umständen erhöht. Außerdem werden für die Gewährleistung derselben Übersetzungszahl die großen Räder in der Reihe Exzentrik-Zykloide-Verzahnung eine wesentlich kleinere Zahl an Zähnen haben, als für eine Evolventenverzahnung, was bei identischem Umfang der Räder die Belastungsfähigkeit noch mehr vergrößert.

Im planetarischen Mechanismus, der in Fig. 22 und 23 dargestellt ist, greift eines der zentralen Räder, und zwar das Rad 67, in die zweiten Räder 63 der doppelten Satelliten 59 ein. Dieses Rad hat den inneren Kranz 68 mit der zykloidalen Form. Alle übrigen Elemente des Mechanismus, z.B. auch die in Fig. 20 und 21, haben ebenfalls dieselben Bezeichnungen. Dieses Schema der gewöhnlichen Evolventenräder erlaubt eine Übersetzungszahl von nicht mehr als 15. Für den Fall beträgt beim bewegungsunfähigen Planetenträger 60 und beim getriebenen zentralen Rad 67 die Übersetzungszahl des Mechanismus i₅₇₋₆₇ =-Z₆₂/Z₅₇ Z₆₇/Z₆₃ = - Z₆₂-Z₆₇/Z₅₇, da Z₆₃ = 1. In der realen Konstruktion ist für Z₅₇ = 20, Z₆₂=47 und Z₆₇=1 i₅₇₋₆₇ = - 25,85. Bei dem getriebenen Planetenträger 60 und beim bewegungsunfähigen zentralen Rad 67 berechnet sich die Übersetzungszahl nach i₅₇₋₆₀ = 1 + Z₆₂-Z₆₇/Z₅₇ und ist bei denselben Werten Z₅₇, Z₆₂ und Z₆₇ gleich i₅₇₋₆₀=26, 85. Dies ist wesentlich höher als die möglichen Werte für dieses Schema des planetarischen Mechanismus mit gewöhnlicher Evolventenverzahnung.

Für die Erhöhung der Gleichmäßigkeit des Drehens der Räder und der Gleichmäßigkeit der Übertragung des Moments ist es zweckmäßig, die Exzentrik-Zykloide-Räder gestuft auszuführen, wie es in Fig. 24 für die Exzentrik-Zykloide-Verzahnung der Räder der ersten Reihe gezeigt ist. Das zentrale einzahnige Rad 57 ist gestuft, d. h. es ist aus den zwei identischen Kränzen 70 und 71 gebildet, die die Form von exzentrisch in entgegengesetzte Seiten verschobenen Kreisen haben. Dies ist ähnlich der Verdrehung der Exzentriker in Hinsicht zueinander um 180 Grad. Der Winkel der Verdrehung bestimmt sich wie der Winkelschritt des einzahnigen Rads 57 (360 Grad), dividiert durch die Zahl der Kränze des gestuften Rads (die Zahl der Kränze 2). Jeder der Kränze 70 und 71 des gestuften Rads 57 wirkt entsprechend mit den zykloidalen Kränzen 72 und 73 der gestuften Räder 62 der Satelliten 59 zusammen. Die Kränze 72 und 73 sind in Hinsicht zueinander um die Hälfte des Winkelschritts verdreht. Für die Räder in Fig. 24 beträgt dieser Winkel 18 Grad.

Beim Drehen des Rads 57 im Uhrzeigersinn befindet sich sein Kranz 70 in der Phase des Eintritts in den Eingriff mit den Kränzen 72 der oberen und linken Satelliten und der Kranz 71 mit dem Kranz 73 des rechten Satelliten 59. Daraufhin nehmen an der Übertragung des Drehmoments gleichzeitig drei Kränze der drei Satelliten teil, was die Gleichmäßigkeit der Übertragung des Moments erhöht. Es ist offensichtlich, dass der Mechanismus mit gestuften Rädern auch mit zwei Satelliten arbeitsfähig ist, da sich in einer beliebigen Lage des Rads mindestens ein Paar Kränze in der Phase des Eingangs im Eingriff befinden und die Gesamtzahl der Kränze der Satelliten in dieser Reihe gleich 4 ist.

Um die Übersetzungszahl noch weiter zu steigern, kann man die Verzahnung beider Reihen als Exzentrik-Zykloide-Verzahnung ausführen (siehe Fig. 25 und 26). Fig. 25 entspricht dem Schema in Fig. 20 mit allen Außenrädern. Die erste Reihe der Verzahnung ist mit den gestuften Rädern erstellt, wie in Fig. 24 gezeigt. Das zentrale Außenrad 57 besteht aus zwei identischen gestuften Kränzen 70 und 71. Die Kränze stellen die vom Zentrum des Rads exzentrisch verschobenen Kreise dar, die in Hinsicht zueinander um die Hälfte des Winkelschritts verdreht sind. Da die Zahl der Kränze gleich 2 ist, beträgt der Winkel der Verdrehung 180 Grad, d.h. die Kränze 70 und 71 sind entgegengesetzt verschobene Exzentriker. Die ersten Räder 62 der Doppelsatelliten 59 sind ebenfalls gestuft ausgeführt und aus den zwei in Hinsicht zueinander identisch verdrehten gleichen zykloidalen Kränzen 72 und 73 gebildet. Der Winkel der Verdrehung dieser Kränze beträgt ebenfalls die Hälfte des Winkelschritts in Hinsicht zueinander, wobei für 10 Zähne der Winkel der Verdrehung gleich 18 Grad ist. Der Kranz 70 des Rads 57 befindet sich in Eingriff mit den Kränzen 72 der ersten Reihe der Räder 62 des Satelliten 59, und der Kranz 71 ist dabei von den Kränzen 73 dieser Räder angestoßen. Die Exzentrik-Zykloide-Verzahnung ist in der zweiten Reihe, wie in Fig. 21 gezeigt, ausgeführt, und seine Elemente sind ähnlich bezeichnet. D.h. die Kränze 65 der zweiten Räder 63 der Satelliten 59 haben die Form von exzentrisch verschobenen Kreisen, und der Kranz 66 des zentralen Au-βenrads 58 ist zykloidal.

Fig. 26 zeigt eine Exzentrik-Zykloide-Verzahnung in beiden Reihen des Mechanismus, der nach dem Schema der Fig. 22 beschaffen ist. Hier sind auch die Räder in der ersten Reihe des Eingriffs gestuft ausgebildet, wie in Fig. 24 gezeigt ist. Der Unterschied der Fig. 26 zu Fig. 25 ist nur, dass das zentrale Innenrad 67 in der zweiten Reihe mit zykloidalem Profil 68 ausgeführt ist. Die übrigen Bezeichnungen in Fig. 26 entsprechen den Bezeichnungen der Fig. 25.

Eine konkrete Konstruktion eines planetarischen Mechanismus in Fig. 27 ist vorbestimmt für die Arbeit als Verstärker des Drehmoments (Momentschlüssel). Im zylindrischen Gehäuse 74 sind die Flanschdiscussen 75 und 76 miteinander per Durchgangsbolzen hart verbunden (in Fig. 27 nicht gezeigt). Die verbundenen Discussen 75 und 76 bilden den Planetenträger des planetarischen Mechanismus. In den Öffnungen 77 und 78 der Discusse 75 und 76 sind drei Satelliten 59 auf den Achsen 79 montiert. Das zentrale Rad 57 ist ein führendes Glied und ist zusammen mit der führenden Welle 80 ausgeführt. Das Rad 57 ist gestuft und aus zwei identischen Kränzen 81 und 82 ausgebildet, die die Exzentriker darstellen, die zu verschiedenen Seiten der Achse des Rads 57 verschoben sind. Die Kränze 81 und 82 befinden sich im Eingriff mit den identischen zykloidalen Kränzen 83 und 84 der ersten Reihe der gestuften Räder der doppelten Satelliten 59. Die zweiten Räder der Satelliten 59 werden ebenfalls gestuft ausgeführt und von zwei identischen Kränzen in Form von den zu den Gegenseiten exzentrisch verschobenen Kreisen 85 und 86 gebildet. Um fliegende Belastung auf der Achse 79 zu vermeiden, sind diese Kränze im Raum entlang der Achse verlagert und nach beiden Seiten der Kränze 83, 84 der ersten Räder der Satelliten gelegen. Das zweite zentrale Innenrad ist ebenfalls auf der inneren Oberfläche des Gehäuses 74 gestuft und stellt zwei identische entlang der Achse versetzte und in Hinsicht zueinander verdrehte zykloidale Profile 87 und 88 dar. Ein getriebenes Glied ist der Planetenträger, mit dessen Discusse 75 das Quadrat 89 für den abnehmbaren Kopf des Schlüssels hart verbunden ist. Das Gehäuse 74 hat Stirn-Nuten 90, durch die es mit den bewegungsunfähigen Elementen für die Abnahme des reaktiven Moments befestigt ist. Die Übersetzungszahl des Getriebe-Schlüssels ist i=1+Z₈₇Z₈₇ = 33, wobei Z₈₃ und Z₈₇ gleich der Zahl der Zähne der zykloidalen Kränze 83 der Satelliten 59 und der zykloidalen Kränze 87 der zentralen Räder des inneren Eingriffs ist.

Bei der Auswahl der Stützglieder, der führenden Glieder und der getriebenen Glieder im konkreten Mechanismus ist sich nach folgenden Gründen zu richten. Wenn die geforderte Übersetzungszahl einer Reihe des Mechanismus mit Exzentrik-Zykloide-Verzahnung ausreichend ist, so ist es nötig, die gewöhnliche Evolventenverzahnung seitens des führenden Glieds zu positionieren, wie bereits gezeigt. Bei der Notwendigkeit einer Ausführung der Exzentrik-Zykloide-Verzahnung in beiden Reihen, ist die Reihe an der Seite des führenden Glieds aus gestuften Rädern auszuführen.

Bei der Arbeit der angebotenen Mechanismen, die nach dem Schema Davids in Fig. 20 erstellt sind, ist als Getriebe mit führendem Glied (dem zentralen Außenrad 57 und mit bewegungsunfähigem Planetenträger 60) obwohl sich das Evolventenrad 57 im Uhrzeigersinn dreht, wie in Fig. 21 und 22 gezeigt ist. Die ersten Räder 62 der Satelliten 59 drehen sich in entgegengesetzter Richtung mit einer Übersetzungszahl, welche aus dem Verhältnis der Anzahl der Zähne der Kränze 64 und 61 bestimmt ist. Gleichzeitig drehen sich mit den Rädern 62 auch die zweiten Räder 63 dieser Satelliten, die die exzentrisch verschobenen Kreise 65 darstellen. Dabei befinden sich die Kränze 65 der oberen und linken Satelliten in der Phase des Eingangs im Eingriff mit dem zykloidalen Profil 66 des zentralen Rads 58 und gewährleisten seine Verdrehung in der Richtung, die mit der Richtung des Drehens des Antriebsrads 57 übereinstimmt und zwar mit der Übersetzungszahl gleich Z₆₂· Z₅₈ / Z₅₇.

Die Arbeit des Mechanismus, der nach dem Schema in Fig. 22 ausgeführt ist, und in Fig. 23 dargestellt ist, geschieht auf die gleiche Weise, nur dass die Übersetzungszahl sich aus Z₆₂ · Z₆₇ /Z₅₇ bestimmt, d.h. das getriebene Rad dreht sich in die Gegenrichtung.

Es wird die Arbeit der Mechanismen mit zwei Reihen Exzentrik-Zykloide-Verzahnung nach Fig. 25 und 26 als Reduziergetriebe betrachtet. Ein führendes Glied in diesem Regime kann entweder der Planetenträger 60 oder das zentrale Außenrad 57 sein. Es wird als führendes Glied das Rad 57 angenommen. Bei seinem Drehen im Uhrzeigersinn befindet sich der Kranz 70 in der Phase des Eingangs im Eingriff mit den Kränzen 72 der oberen und der linken Satelliten 59 und drehen sich gegen den Uhrzeigersinn. Der zweite Kranz 71 des gestuften Rads 57 befindet sich gleichzeitig im Krafteingriff mit den Kränzen 73 der linken und der rechten Satelliten. So wird in der ersten Reihe des Eingriffs der Leistungsstrom durch alle drei Satelliten übergeben. Das Drehen der Satelliten 59 gegen den Uhrzeigersinn bedeutet das gleichzeitige Drehen der zweiten Räder 63 der Satelliten. Dabei werden sich die Kränze 65 dieser Räder in der Phase des Eingangs im Eingriff mit dem zykloidalen Kranz 66 nur für die linken und oberen Satelliten befinden. Die in den eingreifenden Satelliten wechseln sich ab, jedoch nimmt zu jeder Zeit mindestens ein Satellit an der Übertragung des Drehens an das zentrale Rad 58 teil. Das Rad 58 dreht sich in derselben Richtung, wie auch das Antriebsrad 57. Die Übersetzungszahl berechnet sich im Schema Z₆₂ - Z₅₈, wobei die Übersetzungszahl Z₅₇-mal höher ist, als für ein Getriebe mit einer Reihe einer Exzentrik-Zykloide-Verzahnung in Fig. 21. Wenn als führendes Glied der Planetenträger 60 gewählt ist, dann ist die Übersetzungszahl 1 - Z_{58·}Z_{62 9}1eich.

Die Arbeit des Getriebes in Fig. 26 unterscheidet sich nur durch die entgegengesetzte Richtung des Drehens des getriebenen Rads 67 und die Größe der Übersetzungszahl, die sich mit Z₆₂· Z₆₇ berechnet, d. h. auch Z₅₇ -mal höher ist, als beim Getriebe mit einer Reihe der Exzentrik-Zykloide-Verzahnung nach Fig. 23.

Der Verstärker der Drehmomente nach Fig. 27 arbeitet wie folgt: Die führende Welle 80 dreht das zentrale Rad 57 mit zwei identischen einzahnigen Kränzen 81 und 82 auf entgegengesetzten Seiten der Achse der Exzentriker. Das Drehen wird auf die zykloidalen Kränze 83 und 84 der Satelliten 59 mit vier Zähnen übergeben. Die Satelliten 59 drehen sich zusammen mit den Kränzen 85 und 86 der zweiten Reihe der Räder der Satelliten. Die Kränze 85 und 86 haben einen Zahn mit dem Profil eines exzentrisch verschobenen Kreises. Beim Umlauf dieser Kränze über die zykloidalen Kränze 87 und 88 des bewegungsunfähigen Gehäuses 74 beginnt sich der Planetenträger, der von den Stirndiscussen 75 und 76 gebildet ist, zu drehen. Der Planetenträger ist ein getriebenes Glied. Die Übersetzungszahl des Drehmomentverstärkers beträgt 33. Der Mechanismus hat verhältnismäßig kleine Außenabmessungen bei genügend großem Umfang der Zähne, die die Steigerung seiner Belastungsfähigkeiten bestimmen. Außerdem sind die zykloidalen und die exzentrischen Zähne im Laufe der Arbeit hauptsächlich Spannungen der Kompression ausgesetzt, wobei bei der Evolventenverzahnung der Zahn des Zahnrads auf Biegung arbeitet. Es ist bekannt, dass nach den zugelassenen Belastbarkeiten die Haltbarkeit des Stahls bei der Kompression wesentlich höher ist, als bei der Biegung.

Daher wird in dieser Anmeldung eine neue Art der Verzahnung angeboten, die einen exzentrischen Kreis mit zykloidaler Kurve aufweist. Die gezahnten Mechanismen mit diesem Eingriff verfügen über eine erhöhte Belastungsfähigkeit und eine hohe Übersetzungszahl bei minimalen Abmessungen. Der große Radius der Krümmung der Zähne im Eingriff sowie der Kontakt der Zähne durch die konvex-konkaven Oberflächen erlauben es, die zulässigen Kontaktspannungen zu vergrößern, was die Belastungsfähigkeit des Getriebes noch weiter vergrößert. Der Eingriff verfügt über einen erhöhten Wirkungsgrad aufgrund der durch Reibung verursachten minimalen Verluste.

## Patentansprüche

1. Mechanisches Getriebe für die Übertragung einer drehenden Bewegung zwischen verschiedenen Rädern, wobei:
- die Räder mit im Eingriff stehenden Verzahnungen versehen sind,
- ein kleineres Rad (Ritzel 1) mit einem einzigen Zahn ausgestattet ist,
- das gezahnte Profil des einzahnigen Rads (1) durch eine konsequente und ununterbrochene Verdrehung der Stirnschnitte (2) des Rads (1) gebildet ist, welche eine Schraubenoberfläche erzeugen und
- ein größeres Rad (4) Schraubenzähne (5) im Stirnschnitt aufweist, welche im Eingriff mit dem kleineren Rad (1) stehen, wobei die krumme Oberfläche der Zähne des größeren Rads (4) durch die konsequente und ununterbrochene Verdrehung der Stirnschnitte um die Achse des Rads (4) gebildet ist,
**dadurch gekennzeichnet, dass**
- die Stirnschnitte (2) des einzahnigen Rades (1) einen Kreis (3, 3', 3", 3"') darstellen, der relativ zur Drehachse des Rades exzentrisch verschoben ist, und
- sich in jedem Stirnschnitt der Räder (1, 4) die Profile (3, 5) im Eingriff befinden, die vom exzentrisch verschobenen Kreis (3) und von einer Zykloide-Kurve (5) umrissen sind

2. Mechanisches Getriebe nach Anspruch 1,
**dadurch gekennzeichnet,**
**dass** der Winkel der axialen Überdeckung des kleineren Rads (1) 180 Grad überschreitet.

3. Mechanisches Getriebe nach Anspruch 1,
**dadurch gekennzeichnet, dass**
- die Räder (1, 4) zylindrisch ausgebildet und mit parallelen Achsen ausgestattet sind und
- das größere Rad (4) ein gezahntes Außenprofil in Form einer Äquidistante einer Epizykloide im Stirnschnitt aufweist.

4. Mechanisches Getriebe nach Anspruch 1,
**dadurch gekennzeichnet,dass**
- die Räder (1, 4) zylindrisch ausgebildet und mit parallelen Achsen ausgestattet sind und
- das größere Rad (4) ein gezahntes Innenprofil in Form einer Äquidistante einer Hypozykloide im Querschnitt aufweist.

5. Mechanisches Getriebe nach Anspruch 1,
**dadurch gekennzeichnet, dass**
- die Räder (9, 10) konisch ausgebildet und mit sich kreuzenden Achsen ausgestattet sind,
- das größere Rad (10) ein zykloides Profil in dem zur Seitenfläche des Rades (10) normal liegenden Querschnitt hat, oder
- das größere Rad ein zykloides Profil in den sphärischen Schnitten (12) des Rades (10) hat, die ihr Zentrum im Schnittpunkt der Räder (9, 10) haben

6. Mechanisches Getriebe nach den Ansprüchen 1 bis 4,
**dadurch gekennzeichnet,**
**dass** die Schraubenzähne beider Räder (9,10) als Pfeilzähne ausgebildet sind.

## Claims

1. Mechanical gear to transmit rotation between different gearwheels, comprising:
- gearwheels provided with teeth which are engaged,
- the smaller gearwheel (pinion 1) having 1 tooth,
- the toothed profile of the pinion (1) being generated by a consequent and continuous rotation of face sections (2) of the gearwheel (1), forming the helical surface, and
- the greater gearwheel (4) having in its face section helical teeth (5), engaged with the pinion (1), and the curvilinear surface of the greater gearwheel teeth are generated by a consequent and continuous rotation of face sections around the gearwheel (4) axis,
wherein:
- face sections (2) of a single-tooth gearwheel (1) generate the circumference (3, 3', 3", 3"'), eccentrically shifted with respect to the gearwheel axis of rotation, and
- in each face section of gearwheels (1,4) profiles (3,5) are engaged, described by an eccentrically shifted circumference (3) and cycloidal curve (5).

2. Mechanical gear of claim 1, wherein
the angle of helical overlap of the smaller gearwheel (1) is over 180 deg.

3. Mechanical gear of claim 1,
wherein
- the gearwheels (1,4) are cylindrical with parallel axes, and
- the greater gearwheel 4 has an external engagement tooth profile in the face section equidistant to epicycloid.

4. Mechanical gear of claim 1,
wherein
- the gearwheels (1,4) are cylindrical with parallel axes, and
- the greater gearwheel 4 has an internal engagement tooth profile in the face section equidistant to epicycloid.

5. Mechanical gear of claim 1,
wherein
- the gearwheels (9,10) are bevel with intersecting axes,
- the greater gearwheel (10) has cycloidal cross-sections with respect to planes normal to the face surface of the gearwheels (10), or
- the greater gearwheel has cycloidal cross-sections (12) of the gearwheel (10) with respect to spherical surfaces centered at the intersection of gearwheels (9,10) axes.

6. Mechanical gear of any claims 1-4,
wherein helical teeth of both gearwheels (9,10) are herring-bone.

## Revendications

1. Transmission mécanique conçue pour relayer un mouvement rotatoire entre différentes roues, sachant :
- que lesdites roues sont munies de dentures en prise mutuelle,
- qu'une roue de moindre dimensionnement (pignon 1) est dotée d'une unique dent,
- que le profil denté de la roue (1) à dent unique est formé par un tracé vrillé, cohérent et ininterrompu, des sections apparentes (2) de ladite roue (1) qui génèrent une surface hélicoïdale, et
- qu'une roue (4) de plus fort dimensionnement présente, dans la section apparente, des dents hélicoïdales (5) qui sont en prise avec ladite roue (1) de moindre dimensionnement, la surface courbe des dents de la roue (4) de plus fort dimensionnement étant formée par le tracé vrillé, cohérent et ininterrompu, des sections apparentes autour de l'axe de ladite roue (4),
**caractérisée par le fait que**
- les sections apparentes (2) de la roue (1) à dent unique matérialisent une circonférence (3, 3', 3", 3"') décalée excentriquement par rapport à l'axe de rotation de ladite roue, et
- les profils (3, 5), dont la périphérie est délimitée par la circonférence (3) décalée excentriquement et par une courbe cycloïdale (5), sont en prise dans chaque section apparente des roues (1, 4).

2. Transmission mécanique selon la revendication 1,
**caractérisée par le fait**
**que** l'angle du recouvrement axial de la roue (1) de moindre dimensionnement excède 180 degrés.

3. Transmission mécanique selon la revendication 1,
**caractérisée par le fait que**
- les roues (1, 4) sont de réalisation cylindrique et sont pourvues d'axes parallèles, et
- la roue (4) de plus fort dimensionnement présente un profil extérieur denté revêtant, dans la section apparente, la forme d'une ligne équidistante d'une épicycloïde.

4. Transmission mécanique selon la revendication 1,
**caractérisée par le fait que**
- les roues (1, 4) sont de réalisation cylindrique et sont pourvues d'axes parallèles, et
- la roue (4) de plus fort dimensionnement présente un profil intérieur denté revêtant, en coupe transversale, la forme d'une ligne équidistante d'une hypocycloïde.

5. Transmission mécanique selon la revendication 1,
**caractérisée par le fait que**
- les roues (9, 10) sont de réalisation tronconique et sont pourvues d'axes s'entrecroisant, et
- la roue (10) de plus fort dimensionnement présente un profil cycloïdal dans la section transversale normale à la surface latérale de ladite roue (10), ou
- la roue de plus fort dimensionnement présente un profil cycloïdal dans les découpes sphériques (12) de ladite roue (10) dont le centre se trouve au point de concourance des roues (9, 10).

6. Transmission mécanique selon les revendications 1 à 4, **caractérisée par le fait**
- **que** les dents hélicoïdales des deux roues (9, 10) sont réalisées sous la forme de dents en chevron.
